# EUROPEAN PATENT SPECIFICATION

(11) **EP 2 685 390 B1**
(45) Date of publication and mention of the grant of the patent: **09.09.2015**
(21) Application number: 13176477.1
(22) Date of filing: 15.07.2013
(51) Int. Cl.: G06F 17/24, H04L 29/08

(54) **A method for sending user data via a cellular digital telecommunication network and terminal**
Verfahren zum Senden von Benutzerdaten über ein zellulares digitales Telekommunikationsnetzwerk und Endgerät
Procédé pour envoyer des données d'utilisateur par l'intermédiaire d'un réseau de télécommunication numérique cellulaire et terminal

(30) Priority: 13.07.2012 US 201213548733
(43) Date of publication of application: 15.01.2014
(73) Proprietor: SAP SE, 69190 Walldorf (DE)
(72) Inventor: Geithner, Ralf Wolfgang, 64291Darmstadt (DE)
(74) Representative: Richardt Patentanwälte PartG mbB

(56) References cited:
- EP-A1- 1 887 478
- EP-A1- 2 224 348
- US-A1- 2008 276 194

## Description

### Field of invention

The present invention relates to a telecommunication method between an end terminal and a remote terminal, a non-transitory computer readable storage medium embodying a telecommunication method, and an end terminal.

### BACKGROUND

Many conventional software programs, e.g. as are employed for various transactions, may be difficult to use without extensive training. This may be due to their complexity, with some transactions/programs calling for users to enter data into as many as hundreds of input fields, some of which are mandatory and some of which are not mandatory.

Corresponding user interfaces may accordingly exhibit significant visual complexity, in their attempt to mimic the look and feel of paper documents. An untrained user can thus easily become lost in attempting to fill out the various fields, not knowing which ones are mandatory, and/or if certain fields are located on a sub-screen accessed via a tab or some other hidden user interface (UI) element (e.g. a non-deployed toolbar, or a folder tab that has not been clicked on).

The problem of visual representation of a user interface is further complicated for battery powered end terminals. Large machine-parsable electronic documents with numerous computer processible input fields can be downloaded to the end terminal from a remote server via a cellular digital teleceommunication network. In this case a lot of information has to be displayed on a small screen of the end terminal in a user friendly way in order to reduce power consumption during processing of the downloaded document by a user of the end terminal, filling in user data into the computer procissble input fields by the user and sending the user data to the remote terminal.

Document EP 2224348, published on 01/09/2010 discloses a method of populating fields in a fillable electronic form with secured information from an electronic wallet.

### SUMMARY

The present invention provides for embodiments that fill the need of effective user interface and data communication on an end terminal enabling reduction of electrical power consumption of the end terminal. In particular, a telecommunication method between an end terminal and a remote terminal, a non-transitory computer readable storage medium embodying a computer program for performing a telecommunication method between an end terminal and a remote terminal, and an end terminal for telecommunication via a cellular digital telecommunication network with a remote terminal are claimed in the independent claims. Preferred embodiments are described in the corresponding dependent claims.

Reduction in power consumption is important for all electronic system and in particular for battery powered devices. This goal is achieved by employing an effective user interface, which enables reduction in the power consumption not only by reducing user - user interface interaction time, but by providing a user friendly and at the same time power consumption effective user interface as well. This concept can be illustrated on the following example. Suppose an end terminal user wants to register by a provider. The end terminal may be in this example, but is not limited to, a mobile phone, a tablet, a smartphone, and a laptop. In order to register by the provider he has to fill in a multi-page registration form with computer processible input fields for entry of user data. In this case the end terminal user will be confronted with the following problem. It is quite difficult to display the entire multi-page registration form in a user readable way (i.e. when the letters a big enough) on a display of the end terminal. In order to fill the computer processible input fields the user has to study and understand information in the registration form. This process is usually performed by extensive browsing the registration form or user transaction interface, wherein various display scrolling functions are used. These functions demand a lot of computing power and hence the end terminal executing these scrolling functions consumes a lot of power. As a result of this ineffective user interface organization the power consumption will increase and operational time of any battery powered device supporting such ineffective user interfaces will be reduced. Thus the effect of reduction in power consumption can be achieved, when a user interface, which is based on employing low power consuming display functions, is used.

It should be appreciated that the present invention can be implemented in numerous ways, including as a telecommunication method as in claim 1, an apparatus, an end terminal as in claim 19, a computer code, one or more computer readable non-transitory storage media as in claim 11, embodying computer instructions for performing a telecommunication method. Several inventive embodiments are described below. Certain embodiments may be based on utilization of a field explorer component or an input menu comprising a list of computer processible input fields in a downloaded/stored document on the end terminal. Certain embodiments may comprise a field explorer or an input menu in conjunction with at least a portion of an existing user transaction interface. In one operational mode, information may be input by selecting values from a drop menu associated with one field of the field explorer. The corresponding field of the transaction interface may be indicated (e.g. with highlighting), with the user being allowed to click, drag, and drop selected data from the field explorer to that indicated field. Some embodiments may dispense with displaying the transaction interface, presenting the field explorer instead alongside a symbolic representation of a document container. In this operational mode, the user pulls the desired data from the field explorer into the container representation. If the document is persisted (e.g. as a file or on a database), an output representation (e.g. PDF) may be generated and stored.

One embodiment provides a telecommunication method between an end terminal and a remote terminal. The end terminal and the remote terminal are operable for communicating with each other via a cellular digital telecommunication network. The end terminal comprises a display for displaying electronic documents, an interface engine, and a battery for powering up the end terminal. The end terminal is operable for switching into a power saving mode by disabling a functionality of displaying electronic documents using scrolling display functions on the display of the end terminal. The disabling of the functionality in the power saving mode can be applied for all or a portion of applications and processes running on the end terminal. In addition disabling of the functionality can be performed in specific windows of an operational system running on the end terminal. Supporting the scrolling display functions costs more computing power in comparison with static displaying of information. Thus disabling the aforementioned functionality decreases the battery power consumption. In the other words decrease in demand for computing power may enable switching of a central processing unit (CPU, processor) of the end terminal and/or graphics processing unit (CPU, graphics processor) of the end terminal into the power saving mode. This can be implemented by lowering down the clock frequency of at least one of the processors or putting into standby mode one or more cores of one or more processors in a case when the processors are multicore processors. The interface engine is operable for processing machine-parsable electronic documents, analyzing a content of the machine-parsable electronic documents, extracting specific portions from the content of the machine-parsable electronic documents such as, but not limited to, computer porcessible input fields, names of the computer processible fields, possible values of the computer processible fields, explanatory information for computer processible input fields, etc., displaying one or more portions of the machine-parsable electronic documents on the display in a static mode, preparing symbolic representations of the machine-parsable electronic documents, displaying the symbolic representations on the display in the static mode, displaying fragments of the symbolic representations on the display in the static mode.

The method mentioned in the previous paragraph, comprises the following steps. A machine-parsable electronic document is downloaded to the end terminal from the remote server via the cellular digital telecommunication network. The content of the downloaded machine-parsable electronic document comprises a plurality of computer processible input fields for entry of user data, a name for each of the computer processible input fields, and an explanatory information for each of the computer processible input fields. Upon completion of download of the machine-parsable electronic document the interface engine is caused to extract a list of the plurality of computer processible input fields and the names of the computer processible fields from the content of the machine-parsable electronic document. The end terminal is switched into a power saving mode by disabling viewing the entire downloaded machine-parsable electronic document with the help of the functionality of displaying electronic documents using scrolling display functions upon completion of download of the machine-parsable electronic document. The interface engine displays the downloaded machine-parsable electronic document on the screen in a form of an input menu comprising the list of the plurality of the computer processible input fields and manes of the computer processible input fields, wherein each computer processible input field and the corresponding name of the each computer processible field have a unique dedicated menu item. The input menu is used for inputting user data in the respective ones of the plurality of the computer processible input fields. The user data is sent to the remote server by the end terminal via the cellular digital telecommunication network.

Another embodiment provides a non-transitory computer readable storage medium embodying a computer program for performing a telecommunication method between an end terminal and a remote terminal. The end terminal and the remote terminal have the same configurations and functionalities as in the above described embodiment of the telecommunication method between the end terminal and the remote terminal. The method of this embodiment and the method of the above described embodiment are the same as well.

Yet another embodiment provides an end terminal for telecommunication via a cellular digital telecommunication network with a remote terminal. The end terminal comprises: one or more processors; a display for displaying electronic documents, wherein the display has a functionality of display scrolling for displaying electronic documents; a battery for powering up the end terminal; a software program, executable on the end terminal. The end terminal is operable for switching into a power saving mode by disabling a functionality of displaying electronic documents using scrolling display functions on the display of the end terminal. The disabling of the functionality in the power saving mode can be applied for all or a portion of applications and processes running on the end terminal. In addition disabling of the functionality can be performed in specific windows of an operational system running on the end terminal.

The software program is configured to perform the following steps: provide an interface engine on the end terminal for a communication with the remote terminal via the cellular digital network, wherein the interface engine has the same functionalities as in the previously described embodiment of the telecommunication method between the end terminal and the remote terminal; download a machine-parsable electronic document to the end terminal from the remove server via the cellular digital telecommunication network, wherein a content of the machine-parsable electronic document comprises a plurality of computer processible input fields for entry of user data, a name for each of the computer processible input fields, and an explanatory information for each of the computer processible input fields; upon completion of download of the machine-parsable electronic document cause the interface engine to extract a list of the plurality of computer processible input fields and the names of the computer processible fields from the content of the machine-parsable electronic document; upon completion of download of the machine-parsable electronic document cause the end terminal to switch into a power saving mode by disabling the functionality of display scrolling, wherein the end terminal is operable for switching into the power saving mode by disabling the functionality of display scrolling; display the list of the plurality of the computer processible input fields and the names of the computer processible fields as an input menu on the display, wherein the input menu comprises menu items, wherein each computer processible input field and the corresponding name of the each computer processible input filed have a unique dedicated menu item; input the user data in the respective ones of the plurality of the computer processible input fields by using the input menu; send the user data from the end terminal to the remote server via the cellular digital telecommunication network.

The machine-parsable electronic document may be, but is not limited to, a HTML document, a XML document, a WORD document, an EXEL document, a PFD document, and a document comprising all or a portion of these documents.

The cellular telecommunication network may be, but is not limited to, GSM, GRPS, UMTS.

In certain embodiments the interface engine displays a required input field of the list in a manner different from an optional input field.

According to some embodiments the interface engine is configured to display with the list, at least a portion of transaction user interface of the stored/downloaded document and/or explanatory information related to one of the computer processible input field.

In various embodiments the user interface is configured to display with the list, at least a fragment of a symbolic representation of the stored/downloaded document, and the second input comprises dragging the value to the symbolic representation.

Particular embodiments further comprise causing the interface engine to move the first input field to an end of the list after the value has been entered into the stored/downloaded document.

In some embodiments the end terminal is a mobile device and the remote terminal is a server. In particular the end terminal may be, but is not limited to, a mobile phone, a smartphone, a tablet, a laptop. The remote terminal can be but not limited to a server of a service provider connected to a cellular digital telecommunication network

According to various embodiments the interface engine is caused to display the list from a generic input field.

The following detailed description and accompanying drawings provide a better understanding of the nature and advantages of particular embodiments.

### BRIEF DESCRIPTION OF THE DRAWINGS

Figure 1 shows a simplified view of a system for providing a user interface according to an embodiment.
Figure 1A shows an embodiment of a field explorer.
Figure 1B is a simplified flow diagram showing a method according to an embodiment.
Figures 2A-F are screen shots showing one example of a user interface according to an embodiment.
Figures 3-3E are schematic diagrams showing another example of a user interface according to an alternative embodiment.
Figure 4 illustrates hardware of a special purpose computing machine configured to provide a user interface according to one embodiment.
Figure 5 illustrates an example of a computer system.
Figure 6 shows a simplified view of a system for providing a user interface according to an embodiment.
Figure 7 is a flow diagram showing a method according to an embodiment.
Figures 8A-C are screen shots showing one examples of a user interfaces according to embodiments.

### DETAILED DESCRIPTION

In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

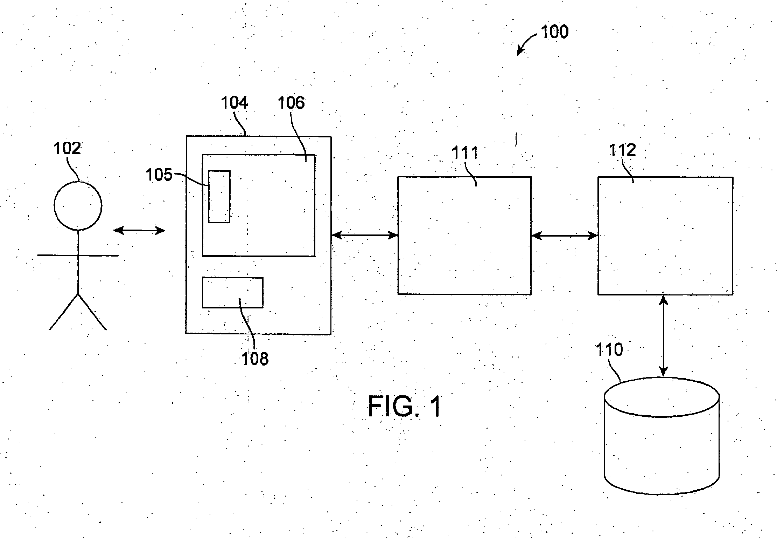

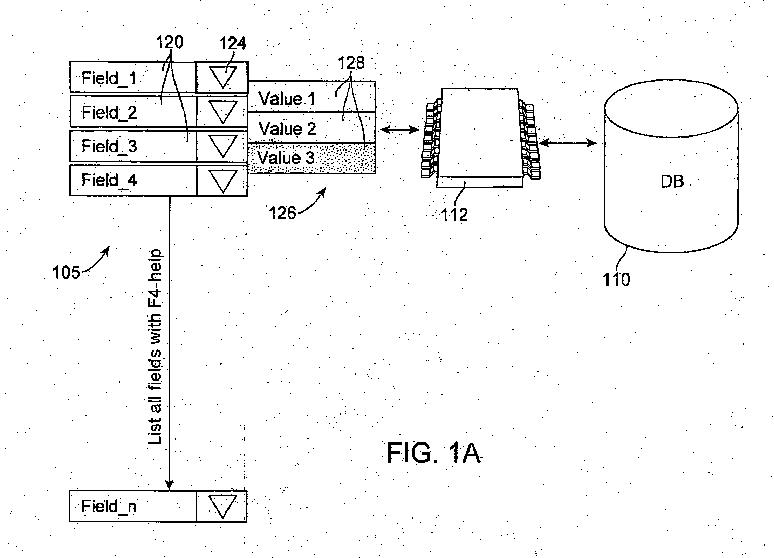

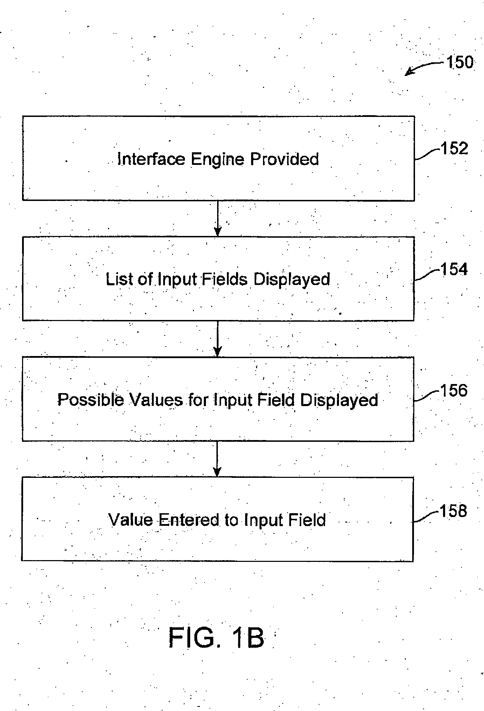

Figure 1 shows a simplified view of a system 100 for providing a user interface according to an embodiment. In particular, a user 102 is equipped with a device 104 (which may be a mobile device such as a smart phone) comprising a display 106 and an input mechanism 108. Examples of such input mechanisms include but are not limited to a touch screen, a mouse, a keypad, or a keyboard.

The user seeks to use the device to access information stored in data warehouse 110 such as a database (DB), via an interface 111. Accordingly a processor comprising an interface engine 112 is configured to provide a field explorer 105 as part of the interface, to receive inputs from the user, and in turn to communicate information to the data warehouse 110. In response to receipt of that information, the data warehouse returns the requested data to the interface engine, which in turn communicates it to the user via the interface.

Figure 1A is a view showing details of an embodiment of a field explorer 105 that is generated and maintained by the interface engine 112 for interaction with a database 110. In particular, the field explorer comprises a listing of different fields 120 that are available for selection and input to a document stored in the database.

In this figure the term "F4-help" refers to input helps to an input field, that provide (dropdown) lists of pre-configured, allowed values where a user can choose from. An example could be a choice of available countries from a dropdown list in an address form.

Upon selection of a particular input field by a user of the field explorer, a value for that input field may be entered. In particular, Figure 1A shows an icon 124 that may trigger a drop down menu 126 listing particular values 128 for a field (Field_1) of the field explorer.

As mentioned above, according to certain embodiments input fields that are required to be completed in a document, may be differentiated from other input fields. This may be accomplished, for example, by the use of font type, font size, and/or color (e.g. font, background), or similar indicators.

Figure 1B is a simplified flow diagram showing an embodiment of a method 150. In a first step 152, an interface engine is provided in communication with a stored document comprising a plurality of available input fields. In a second step 154, the interface engine is caused to display a list of the plurality of available input fields. In a third step 156 the interface engine is caused to display possible values for a first available input field, in response to a first input. In a fourth step 158, the interface engine is caused to enter a value for the first available input field into the stored document, in response to a second input.

### Example - Overlay Mode

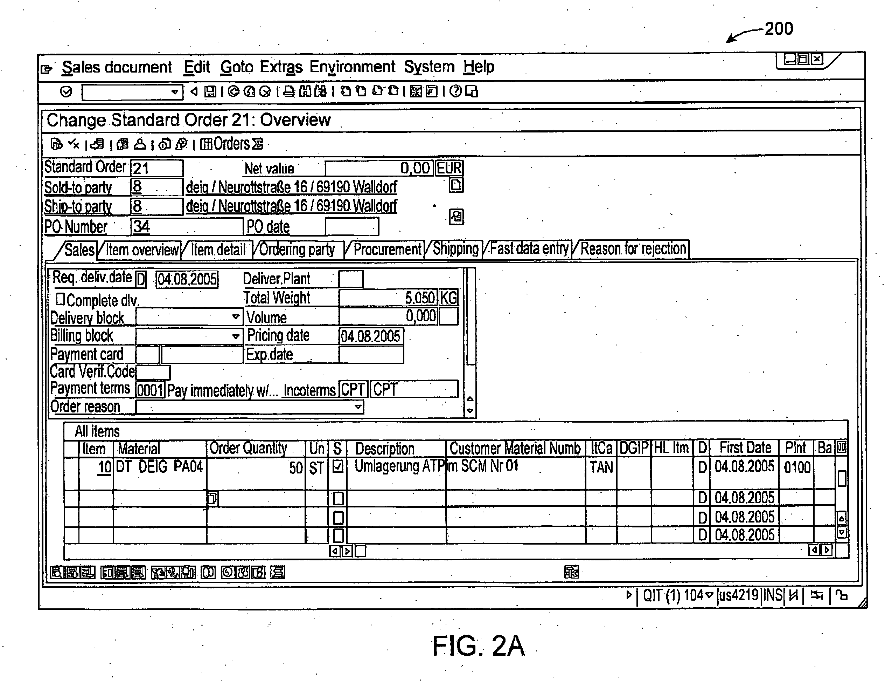

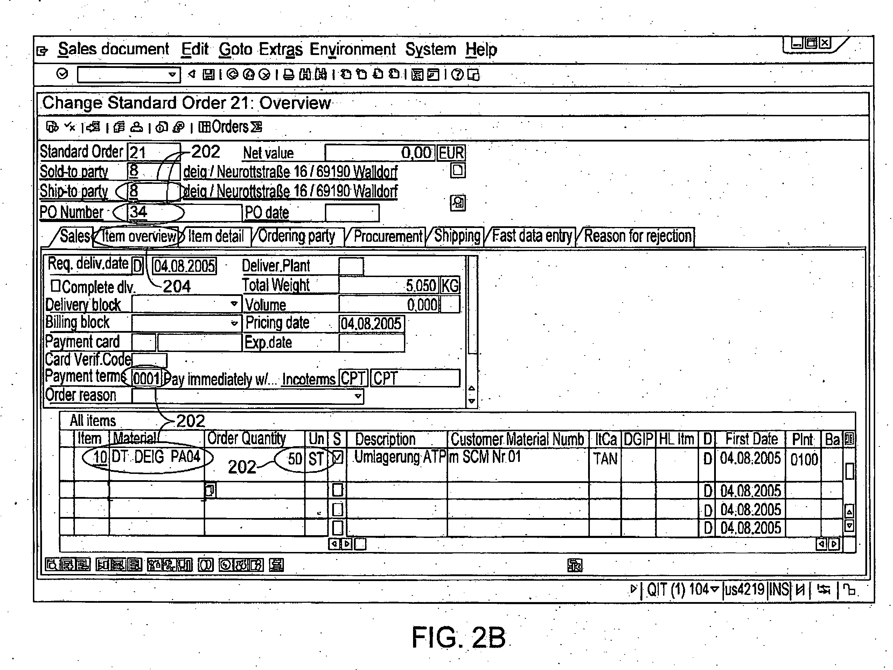

Figures 2A-F are screen shots showing an example of a user interface according to an embodiment utilizing an "overlay" operational mode. Specifically, Figure 2A shows a transaction user interface (UI) 200, here comprising overview screen to change an order form (Standard Order 21). As indicated in Figure 2B, this transaction UI features a plurality of input fields 202 configured to receive information for entry by a user.

Only some of those input fields are visible utilizing a particular access tab 204 (here the "Item overview" tab). Other available input fields may not be visible (e.g. an "item detail" such as input field for a lot number of material), ordinarily requiring the user to manipulate the interface to access another tab.

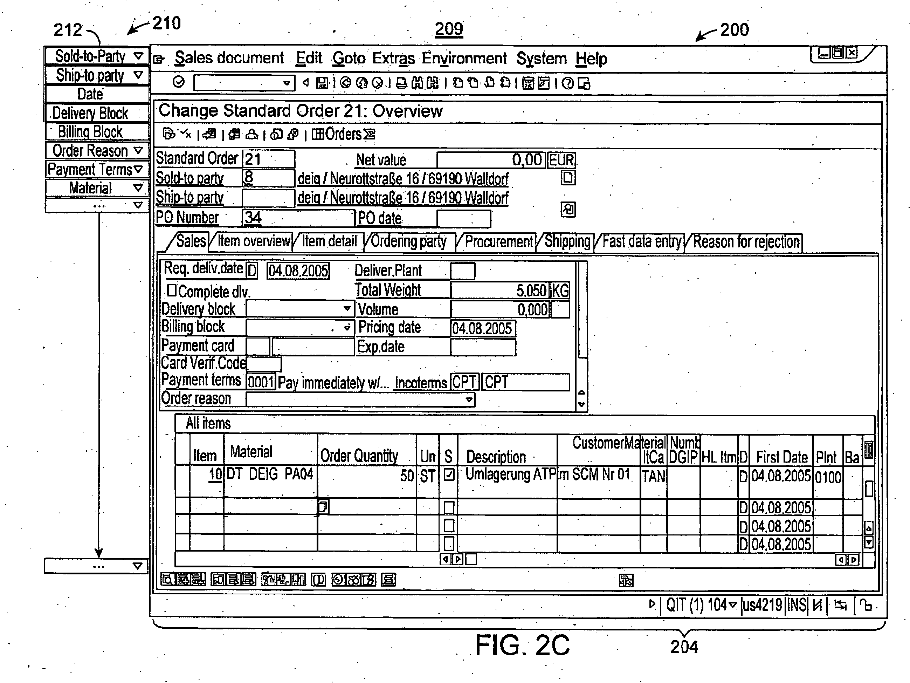

However, Figure 2C shows a screen shot of a user interface 209 featuring a field explorer according to an embodiment, wherein a list of available input fields is presented to the user. In the "Overlay" mode of operation depicted in this example, as shown in Figure 2C the interface further comprises a field explorer 210 that is positioned alongside the existing transaction user interface (UI) 200.

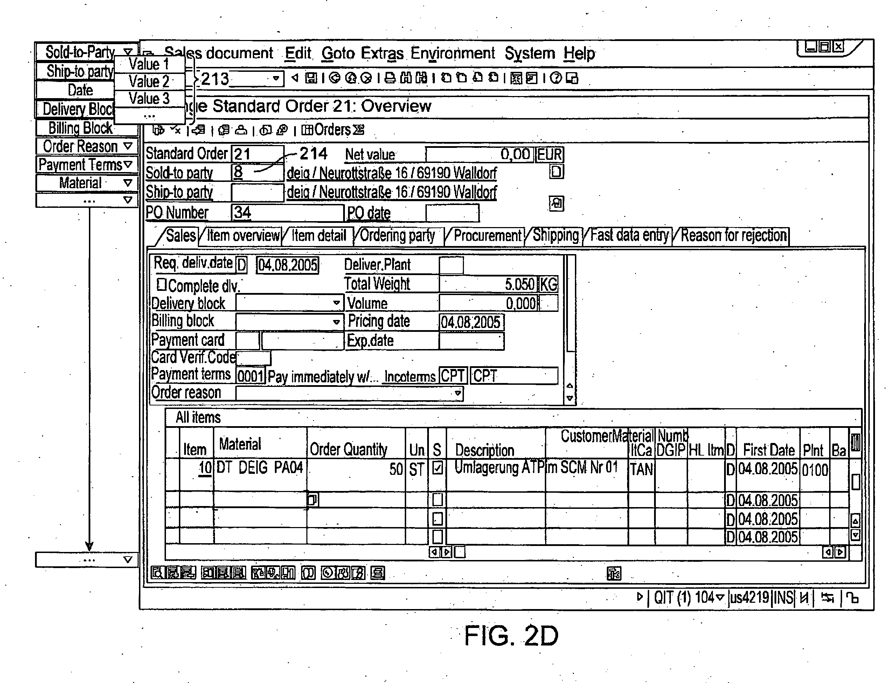

In the specific screen shot of Figure 2C, the transaction UI is deactivated as represented to the user through the use of an overlying gray mask 204. As shown in Figure 2D, the user can now click on a particular field 212 in the field explorer 210, and a list 213 of possible values (F4-help) appears on the screen (e.g. drop down list).

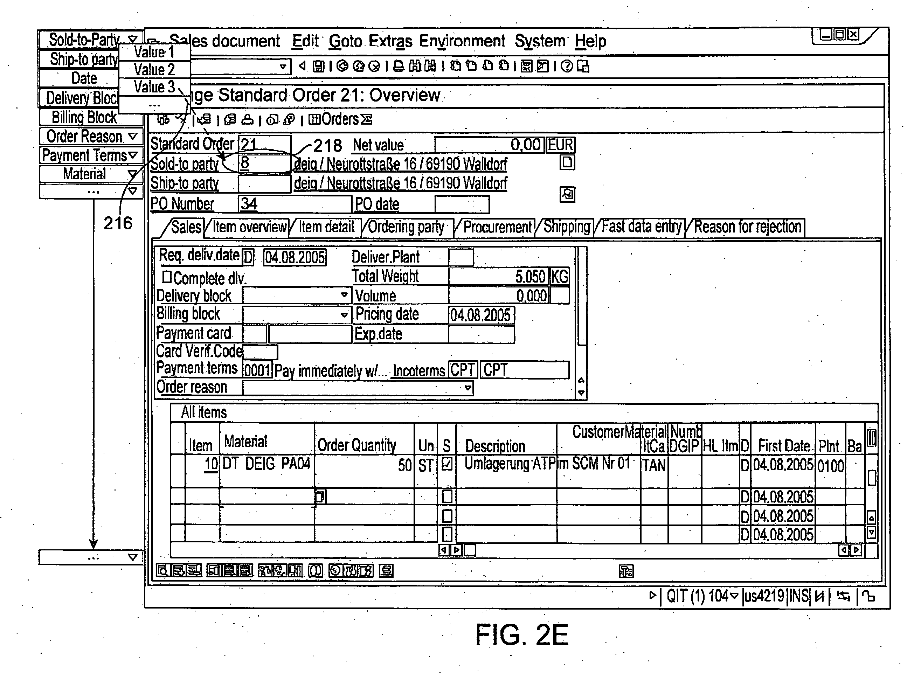

As shown in Figure 2D, once the user clicks on the field 212 in the field explorer, the corresponding field on the transaction UI may be delineated to the user, e.g. by providing a corresponding opening 214 in the gray mask. As further shown in Figure 2E, the user may then click upon a value of a field in the field explorer, drag 216 that value (e.g. with a mouse or touchpad) to the inactivated transaction UI, and drop 218 that value into the highlighted corresponding field of the transaction UI.

If the spatial relation between the field of the field explorer and the corresponding field of the transaction UI is 1:1, there may be no need for the user to aim for the correct field to drag and drop the value. Instead, the user may simply drop the value somewhere within the transaction UI area. If the spatial relation between the field of the field explorer and the corresponding field of the transaction UI is other than 1:1 (e.g. 1:n), then the user may need to indicate the correct field by dragging and dropping the value nearby.

According to some embodiments, the act of filling a field may be indicated by changing the color of the text, field background, and/or field border in order to indicate a "completed" state.

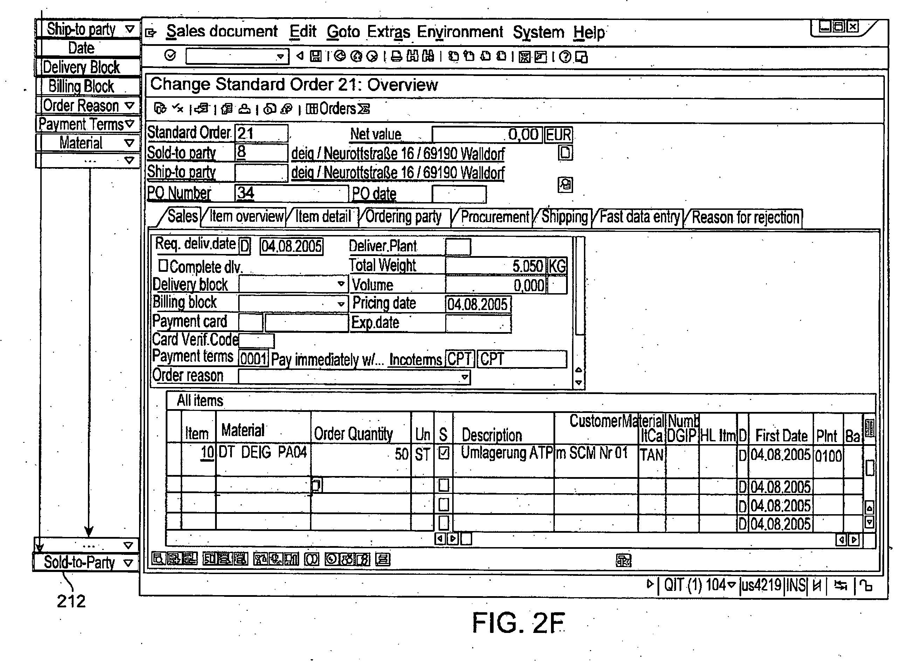

Moreover in certain embodiments the location within the field explorer of a field having data entered thereto by a user, may be changed. For example Figure 2F shows that entry of data to the field 212, has resulted in its relocation to the end (bottom) of the field list, with only non-filled fields remaining at the top of the list of the field explorer.

### Example - Field Explorer Based Transaction

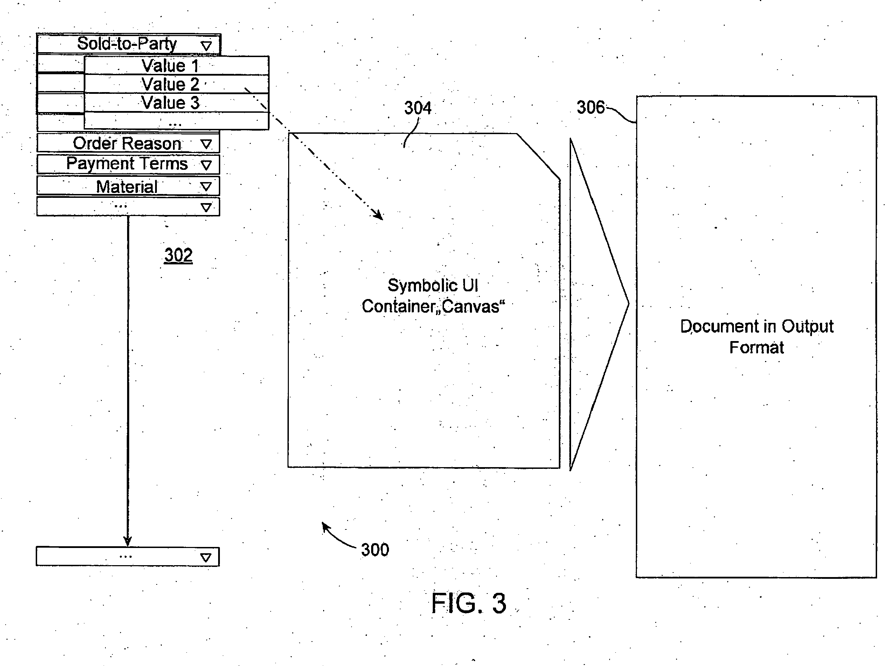

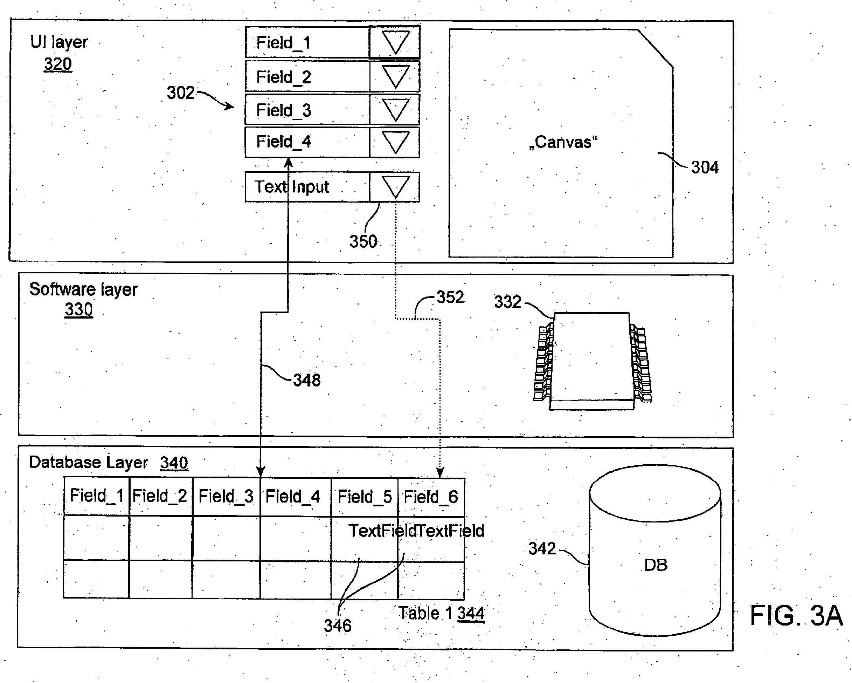

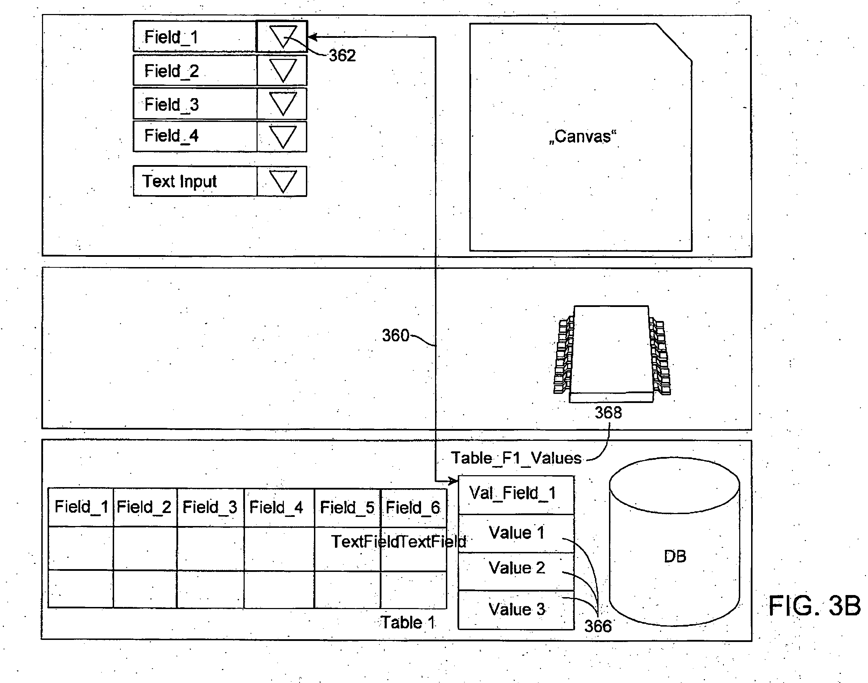

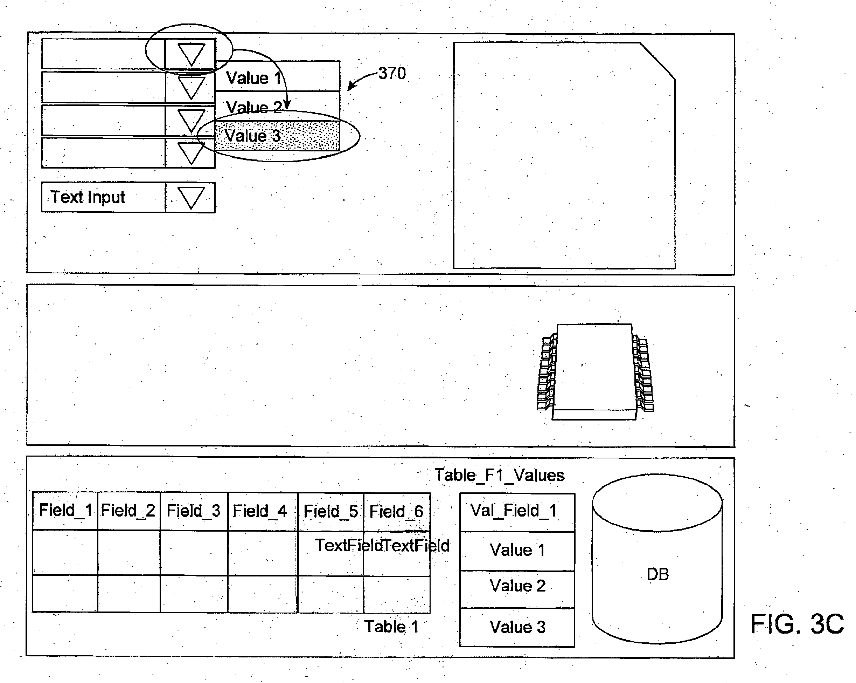

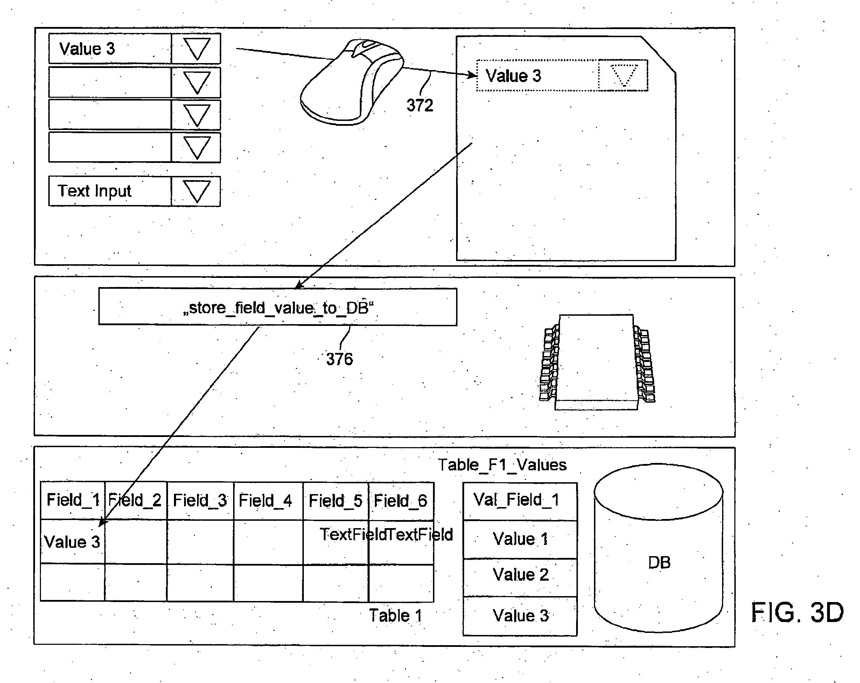

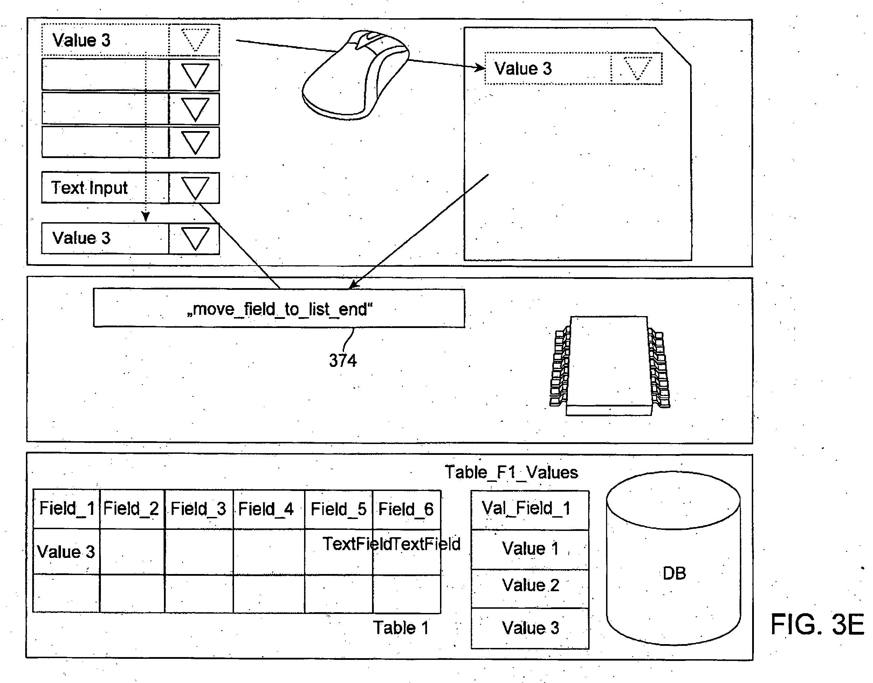

Figures 3-3E illustrate various aspects of another example of a mode of operation of a user interface according to an embodiment. Specifically, as shown in Figure 3, in this example the interface 300 comprises only the field explorer 302 together with a symbolic UI representation 304 of a document container (also referred to hereafter as a "canvas").

While Figure 3 shows a particular embodiment of an interface comprising a field explorer in conjunction with a canvas, this is not absolutely required. For example, an interface could comprise only a single input field, with the user simply providing input to the field through the use of free text entry.

However, where there are more than one text input field (as in the embodiment of Figure 3), the UI may comprise the canvas and the field explorer. Figure 3A is a schematic view showing the environment for the interface example of Figure 3. In particular, the system comprises a user interface layer 320 including the field explorer 302 and the canvas 304.

As mentioned above, in this mode of operation the canvas replaces the traditional transaction UI. The canvas symbolizes the stored document, and is the area on the screen where a user drops items (e.g. fields with a value).

As shown in Figure 3A, the software layer 330 includes the interface engine 332. The interface engine serves to perform processing functions related to generation and maintenance of the user interface, and in particular to the functioning of the field explorer.

Specifically, the interface engine of the software layer is in communication with the database layer 340 of Figure 3A. The database layer comprises a database 342 and a Table 1 344 that includes text fields 346.

The Field_1-Field_4 of the field explorer have a 1:1 relation 348 to the fields of the database. In certain embodiments, the input help function (e.g. F4 key) provides the allowed values.

The Text Input field 350 of the field explorer has a 1:n relation 352 to fields of the database. A value help function may provide allowed fields of the database.

According to certain embodiments, a generic input field may be employed on combination with the canvas feature to provide information for input. In such an embodiment a single generic input field may be accessed by the user, and provide a drop down menu of the various different types of input fields that are available to be input to the document by the user. Selection of the appropriate input field type will in turn allow the user to populate the canvas with relevant information as has been described above.

Figure 3B shows the starting of the program providing the field explorer or the input menu according to the another embodiment. In particular, the routine "Populate Value Helps" 360 is invoked. This method generates a value help icon (▼) 362 that is connected to a drop-down menu 364 presenting possible values 366 in the Table of F1_Values 368.

Figure 3C shows the next step, wherein a user clicks on the value help icon and selects a particular value (here Value 3) from the resulting drop menu 370.

Figure 3D shows the next step, wherein the user commits 372 the selected field to the database, utilizing the drag and drop field of the canvas. This action by the user triggers the following two (2) routines labeled 374 and 376 respectively:
- "store_field_value_to_DB"
- "move_field_to_list_end".

In particular, releasing the field on the canvas invokes the routine "store_field_value_to_DB", wherein the selected field is entered into the database field.

Figure 3E shows the routine "move_field_to_list_end" that is invoked by dropping the field on the canvas. Pursuant to this routine, when the field is committed on the database, that field (e.g. Field_1) is moved to the bottom of the list in the field explorer, to indicate the commitment of the value of that field to the database.

Embodiments may offer various benefits. For example, by providing a field explorer that includes a list of available input fields, certain embodiments may ease the burden on the user to visually identify, navigate between, select, and enter data into, multiple fields of a complex document located in different regions within a traditional transactional UI. Moreover, as described above, some embodiments may further simplify the user interaction by dispensing with display of the traditional transactional UI entirely, replacing it with a symbolic representation of document container. Either embodiment of an interface may be particularly suited to work in conjunction with portable devices having small displays and cramped input environments (e.g. small keys, touch-screens).

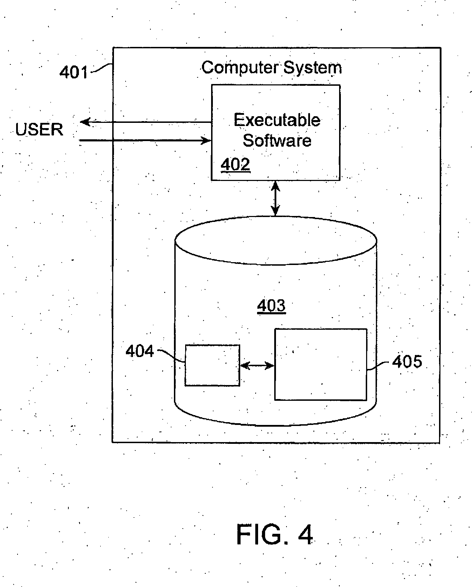

Fig. 4 illustrates hardware of a special purpose computing machine configured to provide a user interface comprising a field explorer according to an embodiment. In particular, computer system 400 comprises a processor 402 that is in electronic communication with a non-transitory computer-readable storage medium 403. This computer-readable storage medium has stored thereon code 405 corresponding to an interface engine. Code 404 corresponds to a database layer. Code may be configured to reference data stored in a database of a non-transitory computer-readable storage medium, for example as may be present locally or in a remote database server. Software servers together may form a cluster or logical network of computer systems programmed with software programs that communicate with each other and work together in order to process requests.

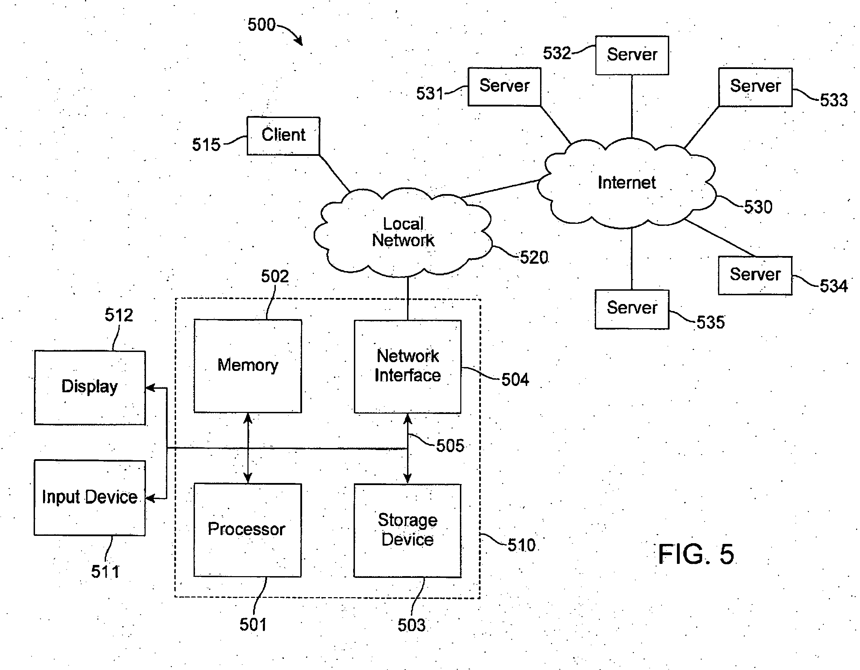

An example computer system (or an example end terminal according to another embodiment) 510 is illustrated in Fig. 5. Computer system 510 includes a bus 505 or other communication mechanism for communicating information, and a processor 501 coupled with bus 505 for processing information. Computer system 510 also includes a memory 502 coupled to bus 505 for storing information and instructions to be executed by processor 501, including information and instructions for performing the techniques described above, for example. This memory may also be used for storing variables or other intermediate information during execution of instructions to be executed by processor 501. Possible implementations of this memory may be, but are not limited to, random access memory (RAM), read only memory (ROM), or both. A storage device 503 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 503 may include source code, binary code, or software files for performing the techniques above, for example. Storage device and memory are both examples of computer readable mediums.

Computer system 510 may be coupled via bus 505 to a display 512, such as a cathode ray tube (CRT) or liquid crystal display (LCD), for displaying information to a computer user. An input device 511 such as a keyboard and/or mouse is coupled to bus 505 for communicating information and command selections from the user to processor 501. The combination of these components allows the user to communicate with the system. In some systems, bus 505 may be divided into multiple specialized buses.

Computer system 510 also includes a network interface 504 coupled with bus 505. Network interface 504 may provide two-way data communication between computer system 510 and the local network 520 (or cellular digital telecommunication network 520 according to another embodiment. The network interface 504 may be a digital subscriber line (DSL) or a modem to provide data communication connection over a telephone line, for example. Another example of the network interface is a local area network (LAN) card to provide a data communication connection to a compatible LAN. Wireless links such as cellular digital telecommunication networks are another example. In any such implementation, network interface 504 sends and receives electrical, electromagnetic, or optical signals that carry digital data streams representing various types of information.

Computer system 510 can send and receive information, including messages or other interface actions, through the network interface 504 across a local network 520, an Intranet, or the Internet 530. For a local network, computer system 510 may communicate with a plurality of other computer machines, such as server 515. Accordingly, computer system 510 and server computer systems represented by server 515 may form a cloud computing network, which may be programmed with processes described herein. In the Internet example, software components, electronic documents, or services may reside on multiple different computer systems 510 or servers 531-535 (or remote terminals 531-535 according to another embodiment) across the network. The processes described above may be implemented on one or more servers, for example. A server 531 may transmit actions or messages from one component, through Internet 530, local network 520, and network interface 504 to a component on computer system 510. The software components and processes described above may be implemented on any computer system and send and/or receive information across a network, for example.

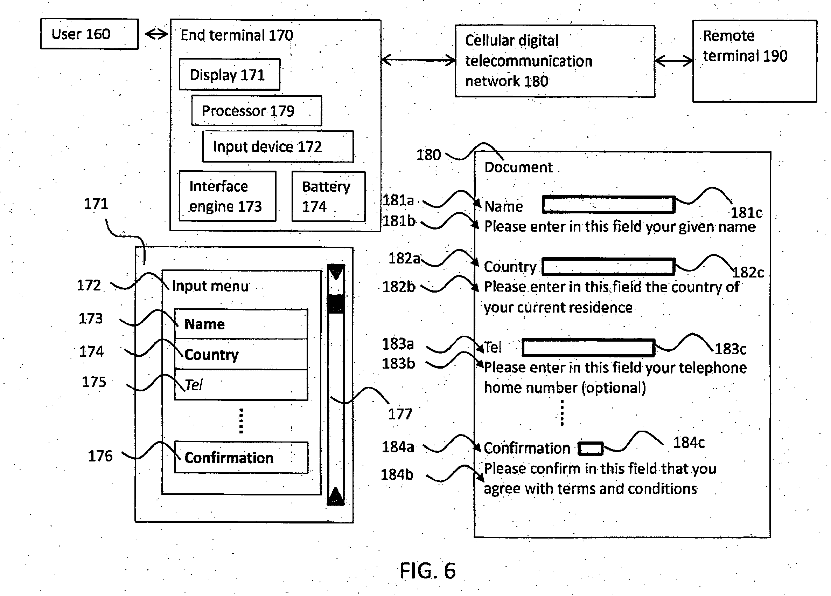

In another embodiment an end terminal 170 comprises a display 171, an input device 172, a battery 174 for powering up the end terminal and an interface engine 173 (Fig. 6). The end terminal 104 is connected with a remote terminal 110 via a cellular digital telecommunication network 180. The interface engine is operable for processing machine-parsable electronic documents 180, analyzing a content of the machine-parsable electronic documents, extracting specific portions from the content of the machine-parsable electronic documents such as, but not limited to, computer porcessible input fields 181c, 182c, 183c, 184c, names of the computer processible fields 181a, 182a, 183a, 184a, possible values of the computer processible fields, explanatory information for computer processible input fields 181b, 182b, 183b, 184b etc., displaying one or more portions of the machine-parsable electronic documents on the display in a static mode, displaying the machine-parsable electronic documents on the display in a static mode, preparing symbolic representations of the machine-parsable electronic documents, displaying the symbolic representations on the display in the static mode, displaying fragments of the symbolic representations on the display in the static mode.

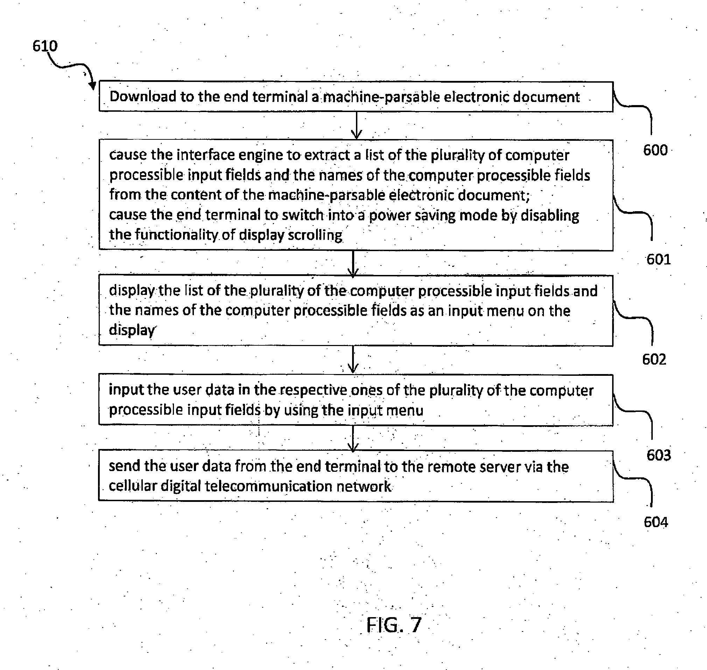

The user 160 downloads to the end terminal a machine-parsable electronic document 180 from the remote server 190. This operation is represented by a process block 600 of a flow diagram 610 represented on Fig. 7. A content of the machine-parsable electronic document comprises a plurality of computer processible input fields 181c, 182c, 183c, 184c for entry of user data, a name for each of the computer processible input fields 181a, 182a, 183a, 184a, and an explanatory information for each of the computer processible input fields 181b, 182b, 183b, 184b. The content of the machine-parsable electronic document may further comprise various sorts/types of information such as, but are not limited to, advertisements, possible values for the machine processible input fields, and links to other electronic documents. When the download of the machine-parsable electronic document is complete, the list of plurality of computer processible input fields and the names of computer processible input fields is extracted by the interface engine and a scrolling display functionality (depicted as a slider 177) of the display 171 is disabled in order to provide a power saving mode of the end terminal. These operations are represented by a process block 601 of the flow diagram 610 represented on Fig. 7. Further the list of the plurality of the computer processible input fields and the names of the computer processible fields is displayed as an input menu 172 on the display 172 by the interface engine. This operation is represented by a process block 602 of the flow diagram 610 represented on Fig. 7. The input menu comprises menu items 173 -176, wherein each computer processible input field and the corresponding name of the each computer processible input filed have a unique dedicated menu item. In particular, the computer processible input field 181c and its name "Name" 181a correspond to menu item 173 called "Name". The computer processible input field 182c and its name "Country" 182a correspond to menu item 174 called "Country". The computer processible input field 183c and its name "Tel" 183a correspond to menu item 175 called "Tel". The computer processible input field 184c and its name "Confirmation" 184a correspond to menu item 176 called "Confirmation". The interface engine may display a menu item corresponding to a required computer processible field on the list in a manner different from a menu item corresponding to an optional computer processible input field of the list. For instance, the mandatory computer processible input fields 181c, 182c, 184c may be represented in the input menu 172 by menu items 173, 174, 176 having names written in bold letters, while optinal computer processible input field 183c may be represented in the input menu 172 by the menu item 175 having mane written in italic letters. This differentiation may simplify user navigation in the input menu. The user 160 inputs the user data in the respective ones of the plurality of the computer processible input fields by using the input menu 172. This operation is represented by a process block 603 of the flow diagram 610 represented on Fig. 7. The user data is sent to the remote server 190 by the end terminal 170 via the cellular digital telecommunication network 180. This operation is represented by a process block 604 of the flow diagram 610 represented on Fig. 7.

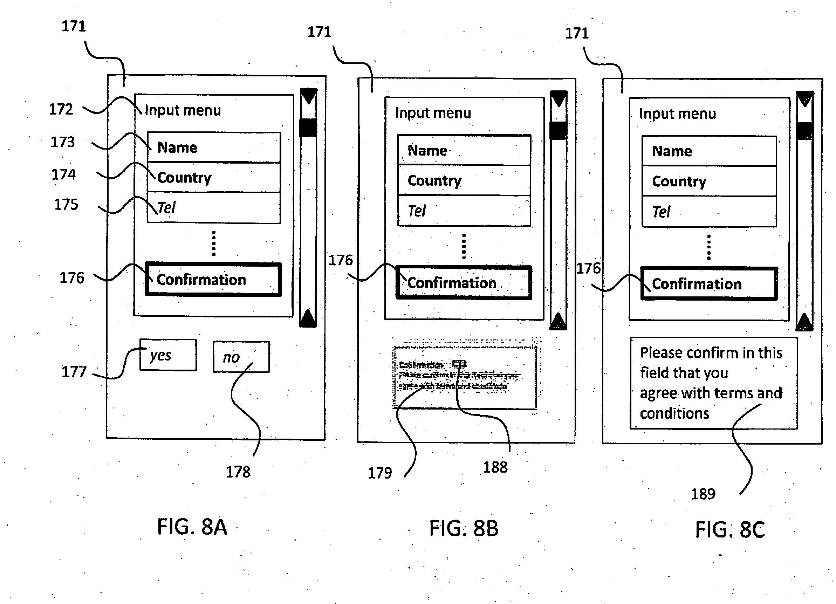

In yet another embodiment in response to a selection of a menu item 176 in the input menu 172 corresponding to one of the computer processible input fields 184c the interface engine is caused to display at least a fragment of a symbolic representation 179 of the machine-parsable electronic document, wherein the fragment of the symbolic representation comprises a symbolic representation 188 of the one of the computer processible input fields (Fig. 8B). In response to a selection of another menu item in the input menu corresponding to another one of the computer processible input fields, causing the interface engine to directly switch to displaying at least another fragment of the symbolic representation, wherein the another fragment of the symbolic representation comprises a symbolic representation of the another one of the computer processible input fields.

The symbolic representation can be a low resolution and/or low magnification image of the entire machine-parsable electronic document, wherein the computer processible input fields 188 are marked on the image of the machine-parsable electronic document in order to make them visible for the user on the display of the end terminal.

As an alternative or as an addition to displaying the symbolic representation or the fragments of the symbolic representation the interface engine can display at least a portion of the explanatory information 189, 184b related to a particular computer processible input field 184c represented by a particular menu item 189 (Fig. 8C).

In yet another embodiment the interface engine may further extract the possible values of the computer processible input fields from the content of the machine-parsable electronic document. In response to a selection of a menu item 176 in the input menu 172 corresponding to the at least one of the computer processible input fields the interface engine is caused to display the possible values 177, 178 for the at least one of the computer processible input field (Fig. 8A). In response to a selection of at least one of the possible values the interface engine is caused to store the at least one selected possible value in the at least one of the computer processible input fields of the machine-parsable electronic document on the end terminal.

In yet another embodiment the interface engine may move a menu item of the input menu 172 to the bottom the menu list, after a user 160 has entered user data for this menu item. For instance, after the user has entered his name in the menu item "Name" 173 depicted on Fig. 6, the menu item "Name" is moved to the bottom of the input menu 172, i.e. below the menu item "Confirmation" 176. As a result the input menu has a menu item "Country" 174 on top.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims.

## Claims

1. A telecommunication method between an end terminal (170) and a remote terminal (190), wherein the end terminal and the remote terminal are operable for communicating with each other via a cellular digital telecommunication network (180), wherein the end terminal comprises a display (171), an interface engine (173), and a battery (174) for powering up the end terminal, wherein the end terminal is operable for switching into a power saving mode by disabling a functionality of displaying electronic documents using scrolling display functions (177) on the display of the end terminal, the method comprising:
downloading to the end terminal a machine-parsable electronic document (180) from the remote terminal via the cellular digital telecommunication network, wherein a content of the machine-parsable electronic document comprises a plurality of computer processible input fields (181c, 182c, 183c, 184c) for entry of user data, a name for each of the computer processible input fields (181a, 182a, 183a, 184a) and an explanatory information for each of the computer processible input fields (181b, 182b, 183b, 184b);
upon completion of download of the machine-parsable electronic document causing the interface engine to extract a list of the plurality of computer processible input fields and the names of the computer processible fields from the content of the machine-parsable electronic document;
upon completion of download of the machine-parsable electronic document causing the end terminal to switch into a power saving mode by disabling the scrolling display functionality of the display of the end terminal;
displaying the list of the plurality of the computer processible input fields and the names of the computer processible fields as an input menu (172) on the display by the interface engine wherein the input menu comprises menu items (173, 174, 175, 176), wherein each computer processible input field and the corresponding name of the each computer processible input filed have a unique dedicated menu item;
inputting the user data in the respective ones of the plurality of the computer processible input fields by using the input menu;
sending the user data to the remote terminal by the end terminal via the cellular digital telecommunication network.

2. The telecommunication method as in claim 1, wherein the end terminal further comprises one or more processors (179), wherein at least one processor operates in a processor power saving mode when end terminal is switched into the power saving mode, wherein the at least one processor operates at the first clock frequency when the at least one processor operates in the processor power saving mode, wherein the at least one processor operates at the second clock frequency when the at least one processor operates not in the processor power saving mode, wherein the second clock frequency is higher than the first clock frequency.

3. The telecommunication method as in claim 1, wherein the end terminal further comprises one or more processors (179), wherein at least one processor operates in a processor power saving mode when end terminal is switched into the power saving mode, wherein the at least one processor operates comprises one or more cores, wherein at least one core of the at least one processor is in standby mode when the at least one processor operates in the processor power saving mode, wherein the at least one core of the at least one processor is not in standby mode when the at least one processor operates not in the processor power saving mode.

4. The method as in any of preceding claims wherein the interface engine displays a menu item (174) corresponding to a required computer processible input field (182c) of the list in a manner different from a menu item (175) corresponding to an optional computer processible input field (183c) of the list.

5. The method as in any of preceding claims wherein the content of the machine-parsable electronic document further comprises possible values for at least one of the computer processible input fields, wherein the method as in claim 1 further comprises:
upon completion of download of the machine-parsable electronic document causing the interface engine on the end terminal to extract the possible values from the content of the machine-parsable electronic document;
wherein inputting the user data in the respective ones of the plurality of the computer processible input fields by using the input menu further comprises:
in response to a selection of a menu item (176) in the input menu corresponding to the at least one of the computer processible input fields, causing the interface engine to display the possible values (177, 178) for the at least one of the computer processible input fields (184c); and
in response to a selection of at least one of the possible values, causing the interface engine to store the at least one selected possible value in the at least one of the computer processible input fields of the machine-parsable electronic document on the end terminal.

6. The method as in any of preceding claims wherein inputting the user data in the respective ones of the plurality of the computer processible input fields by using the input menu further comprises:
in response to a selection of a menu item (176) in the input menu corresponding to one of the computer processible input fields, causing the interface engine to display at least a fragment of a symbolic representation of the machine-parsable electronic document, wherein the fragment of the symbolic representation (179) comprises a symbolic representation (188) of the one of the computer processible input fields (184c); and
in response to a selection of another menu item in the input menu corresponding to another one of the computer processible input fields, causing the interface engine to directly switch to displaying at least another fragment of the symbolic representation, wherein the another fragment of the symbolic representation comprises a symbolic representation of the another one of the computer processible input fields.

7. The method as in any of preceding claims wherein inputting the user data in the respective ones of the plurality of the computer processible input fields by using the input menu further comprises:
in response to a selection of a menu item (176) in the input menu corresponding to one of the computer processible input fields (184c), causing the interface engine to display at least a portion of an explanatory information (189; 184b) of the one of the computer processible input fields; and
in response to a selection of another menu item in the input menu corresponding to another one of the computer processible input fields, causing the interface engine to directly switch to displaying at least a portion of another explanatory information of the another one of the computer processible input fields.

8. The method as in one of the preceding claims further comprising causing the interface engine to move a menu item of the input menu corresponding to one of the computer processible input fields to an end of the input menu after user data requested in the one of the computer processible input fields has been stored in the one of the computer processible input fields of the machine-parsable electronic document on the end terminal.

9. The method as in any of preceding claims wherein the interface engine is caused to display the list from a generic computer processible input field.

10. The method as in any of preceding claims wherein the end terminal is a mobile device and the remote terminal is a server.

11. A non-transitory computer readable storage medium embodying a computer program for performing a telecommunication method between an end terminal (170) and a remote terminal (190), wherein the end terminal and the remote terminal are operable for communicating with each other via a cellular digital telecommunication network (180), wherein the end terminal comprises a display (171), an interface engine (173), and a battery (174) for powering up the end terminal, wherein the end terminal is operable for switching into a power saving mode by disabling a functionality of displaying electronic documents using scrolling display functions (177) on the display of the end terminal, the method comprising:
downloading to the end terminal a machine-parsable electronic document (180) from the remote terminal via the cellular digital telecommunication network, wherein a content of the machine-parsable electronic document comprises a plurality of computer processible input fields (181c, 182c, 183c, 184c) for entry of user data, a name for each of the computer processible input fields (181a, 182a, 183a, 184a), and an explanatory information for each of the computer processible input fields (181b, 182b, 183b, 184b);
upon completion of download of the machine-parsable electronic document causing the interface engine to extract a list of the plurality of computer processible input fields and the names of the computer processible fields from the content of the machine-parsable electronic document;
upon completion of download of the machine-parsable electronic document causing the end terminal to switch into a power saving mode by disabling the scrolling display functionality of the display of the end terminal;
displaying the list of the plurality of the computer processible input fields and the names of the computer processible fields as an input menu (172) on the display by the interface engine, wherein the input menu comprises menu items (173, 174, 175, 176), wherein each computer processible input field and the corresponding name of the each computer processible input filed have a unique dedicated menu item;
inputting the user data in the respective ones of the plurality of the computer processible input fields by using the input menu;
sending the user data to the remote terminal by the end terminal via the cellular digital telecommunication network.

12. The non-transitory computer readable storage medium as in claim 11 wherein the interface engine displays a menu item (174) corresponding to a required computer processible input field (182c) of the list in a manner different from a menu item (175) corresponding to an optional computer processible input field (183c) of the list.

13. The non-transitory computer readable storage medium as in claims 11 or 12 wherein the content of the machine-parsable electronic document further comprises possible values for at least one of the computer processible input fields, wherein the method further comprises:
upon completion of download of the machine-parsable electronic document causing the interface engine on the end terminal to extract the possible values from the content of the machine-parsable electronic document;
wherein inputting the user data in the respective ones of the plurality of the computer processible input fields by using the input menu further comprises:
in response to a selection of a menu item (176) in the input menu corresponding to the at least one of the computer processible input fields (184c), causing the interface engine to display the possible values (178, 177) for the at least one of the computer processible input field; and
in response to a selection of at least one of the possible values, causing the interface engine to store the at least one selected possible value in the at least one of the computer processible input fields of the machine-parsable electronic document on the end terminal.

14. The non-transitory computer readable storage medium as in claims 11, 12, or 13 wherein inputting the user data in the respective ones of the plurality of the computer processible input fields by using the input menu further comprises:
in response to a selection of a menu item (176) in the input menu corresponding to one of the computer processible input fields, causing the interface engine to display at least a fragment of a symbolic representation (179) of the machine-parsable electronic document, wherein the fragment of the symbolic representation comprises a symbolic representation (188) of the one of the computer processible input fields (184c); and
in response to a selection of another menu item in the input menu corresponding to another one of the computer processible input fields, causing the interface engine to directly switch to displaying at least another fragment of the symbolic representation, wherein the another fragment of the symbolic representation comprises a symbolic representation of the another one of the computer processible input fields.

15. The non-transitory computer readable storage medium as in claims 11, 12, 13, or 14 wherein inputting the user data in the respective ones of the plurality of the computer processible input fields by using the input menu further comprises:
in response to a selection of a menu item (176) in the input menu corresponding to one of the computer processible input fields (184c), causing the interface engine to display at least a portion of an explanatory information (189; 184b) of the one of the computer processible input fields; and
in response to a selection of another menu item in the input menu corresponding to another one of the computer processible input fields, causing the interface engine to directly switch to displaying at least a portion of another explanatory information of the another one of the computer processible input fields.

16. The non-transitory computer readable storage medium as in claims 11, 12, 13, 14, or 15 wherein the method further comprises causing the interface engine to move a menu item of the input menu corresponding to one of the computer processible input fields to an end of the input menu after user data requested in the one of the computer processible input fields has been stored in the one of the computer processible input fields of the machine-parsable electronic document on the end terminal..

17. The non-transitory computer readable storage medium as in claims 11, 12, 13, 14, 15, or 16 wherein the interface engine is caused to display the list from a generic computer processible input field.

18. The non-transitory computer readable storage medium as in claims 11, 12, 13, 14, 15, 16, or 17 wherein the end terminal is a mobile device and the remote terminal is a server.

19. An end terminal (170) for telecommunication via a cellular digital telecommunication network (180) with a remote terminal (190) comprising:
one or more processors (179);
a display (171) for displaying electronic documents, wherein the display has a functionality of display scrolling for displaying electronic documents;
a battery (174) for powering up the end terminal;
a software program, executable on said end terminal, the software program configured to:
provide an interface engine (174);
download to the end terminal a machine-parsable electronic document (180) from the remote terminal via the cellular digital telecommunication network, wherein a content of the machine-parsable electronic document comprises a plurality of computer processible input fields (181c, 182c, 183c, 184c) for entry of user data, a name for each of the computer processible input fields (181a, 182a, 183a, 184a), and an explanatory information for each of the computer processible input fields (181b, 182b, 183b, 184b);
upon completion of download of the machine-parsable electronic document cause the interface engine to extract a list of the plurality of computer processible input fields and the names of the computer processible fields from the content of the machine-parsable electronic document;
upon completion of download of the machine-parsable electronic document cause the end terminal to switch into a power saving mode by disabling the functionality of display scrolling, wherein the end terminal is operable for switching into the power saving mode by disabling the functionality of display scrolling (177);
display the list of the plurality of the computer processible input fields and the names of the computer processible fields as an input menu (172) on the display, wherein the input menu comprises menu items (173, 174, 175, 176), wherein each computer processible input field and the corresponding name of the each computer processible input filed have a unique dedicated menu item;
input the user data in the respective ones of the plurality of the computer processible input fields by using the input menu;
send the user data to the remote terminal via the cellular digital telecommunication network.

20. The end terminal as in claim 19 wherein the software program is further configured to:
cause the interface engine to display a menu item (174) corresponding to a required computer processible input field (182c) of the list in a manner different from a menu item (175) corresponding to an optional computer processible input field (183c) of the list.

21. The end terminal as in claims 19 or 20 wherein the content of the machine-parsable electronic document further comprises possible values for at least one of the computer processible input fields, wherein the software program is further configured to:
upon completion of download of the machine-parsable electronic document cause the interface engine on the end terminal to extract the possible values from the content of the machine-parsable electronic document;
wherein input the user data in the respective ones of the plurality of the computer processible input fields by using the input menu further comprises:
in response to a selection of a menu item (176) in the input menu corresponding to the at least one of the computer processible input fields, cause the interface engine to display the possible values (177,178) for the at least one of the computer processible input fields (184c); and
in response to a selection of at least one of the possible values, cause the interface engine to store the at least one selected possible value in the at least one of the computer processible input fields of the machine-parsable electronic document on the end terminal.

22. The end terminal as in claims 19, 20, or 21 wherein input the user data in the respective ones of the plurality of the computer processible input fields by using the input menu further comprises:
in response to a selection of a menu item (176) in the input menu corresponding to one of the computer processible input fields, cause the interface engine to display at least a fragment of a symbolic representation of the machine-parsable electronic document, wherein the fragment of the symbolic representation (179) comprises a symbolic representation (188) of the one of the computer processible input fields (184c); and
in response to a selection of another menu item in the input menu corresponding to another one of the computer processible input fields, cause the interface engine to directly switch to displaying at least another fragment of the symbolic representation, wherein the another fragment of the symbolic representation comprises a symbolic representation of the another one of the computer processible input fields.

23. The end terminal as in claims 19, 20, 21, or 22 wherein input the user data in the respective ones of the plurality of the computer processible input fields by using the input menu further comprises:
in response to a selection of a menu item (176) in the input menu corresponding to one of the computer processible input fields (184c), cause the interface engine to display at least a portion of an explanatory information (189, 184b) of the one of the computer processible input fields; and
in response to a selection of another menu item in the input menu corresponding to another one of the computer processible input fields, cause the interface engine to directly switch to displaying at least a portion of another explanatory information of the another one of the computer processible input fields.

24. The end terminal as in claims 19, 20, 21, 22, or 23, wherein the software program is further configured to:
causinge the interface engine to move a menu item of the input menu corresponding to one of the computer processible input fields to an end of the input menu after user data requested in the one of the computer processible input fields has been stored in the one of the computer processible input fields of the machine-parsable electronic document on the end terminal..

25. The end terminal as in claims 19, 20, 21, 22, 23, or 24 wherein the software program is futher configured to cause interface engine to display the list from a generic computer processible input field.

26. The end terminal as in claims 19, 20, 21, 22, 23 or 25 wherein the end terminal is a mobile device and the remote terminal is a server.

## Patentansprüche

1. Telekommunikationsverfahren zwischen einem Endgerät (170) und einem Gegen-Endgerät (190), wobei das Endgerät und das Gegen-Endgerät für eine gegenseitige Kommunikation über ein zelluläres digitales Telekommunikationsnetz (180) ausgelegt sind, wobei das Endgerät ein Display (171), eine Interface Engine (173) und eine Batterie (174) zur Bestromung des Endgeräts umfasst, wobei das Endgerät dafür ausgelegt ist, in einen Energiesparmodus zu schalten durch Außerkraftsetzen einer Funktion, mit der elektronische Dokumente unter Verwendung von Bildlaufanzeigefunktionen (177) auf dem Display des Endgeräts dargestellt werden, wobei das Verfahren umfasst:
Herunterladen eines maschinenlesbaren elektronischen Dokuments (180) vom Gegen-Endgerät über das zelluläre digitale Telekommunikationsnetz auf das Endgerät, wobei ein Inhalt des maschinenlesbaren elektronischen Dokuments mehrere Computer-verarbeitbare Eingabefelder (181c, 182c, 183c, 184c) für die Eingabe von Anwenderdaten, einen Namen für jedes von den Computer-verarbeitbaren Eingabefeldern (181a, 182a, 183a, 184a) und erläuternde Informationen zu jedem von den Computer-verarbeitbaren Eingabefeldern (181b, 182b, 183b, 184b) umfasst;
nach Abschluss des Herunterladens des maschinenlesbaren elektronischen Dokuments: Bewirken, dass die Interface Engine eine Liste der mehreren Computer-verarbeitbaren Eingabefelder und die Namen der Computer-verarbeitbaren Eingabefelder aus dem Inhalt des maschinenlesbaren elektronischen Dokuments extrahiert;
nach Abschluss des Herunterladens des maschinenlesbaren elektronischen Dokuments: Bewirken, dass das Endgerät in einen Energiesparmodus schaltet durch Außerkraftsetzen der Bildlaufanzeigefunktion des Endgeräte-Display;
Anzeigen der Liste der mehreren Computer-verarbeitbaren Eingabefelder und der Namen der Computer-verarbeitbaren Eingabefelder als Eingabemenü (172) auf dem Display durch die Interface Engine, wobei das Eingabemenü Menüpunkte (173, 174, 175, 176) umfasst, wobei jedes Computer-verarbeitbare Eingabefeld und der entsprechende Name des Computer-verarbeitbaren Eingabefelds einen eindeutig zugewiesenen Menüpunkt aufweisen;
Eingeben der Anwenderdaten in die entsprechenden von den mehreren Computer-verarbeitbaren Eingabefelder unter Verwendung des Eingabemenüs;
Senden der Anwenderdaten durch das Endgerät über das zelluläre digitale Telekommunikationsnetz an das Gegen-Endgerät.

2. Telekommunikationsverfahren nach Anspruch 1, wobei das Endgerät ferner einen oder mehrere Prozessoren (179) umfasst, wobei mindestens ein Prozessor in einem Prozessor-Energiesparmodus arbeitet, wenn das Endgerät in den Energiesparmodus geschaltet wird, wobei der mindestens eine Prozessor bei der ersten Taktfrequenz arbeitet, wenn der mindestens eine Prozessor im Prozessor-Energiesparmodus arbeitet, wobei der mindestens eine Prozessor bei einer zweiten Taktfrequenz arbeitet, wenn der mindestens eine Prozessor nicht im Prozessor-Energiesparmodus arbeitet, wobei die zweite Taktfrequenz höher ist als die erste Taktfrequenz.

3. Telekommunikationsverfahren nach Anspruch 1, wobei das Endgerät ferner einen oder mehrere Prozessoren (179) umfasst, wobei mindestens ein Prozessor in einem Prozessor-Energiesparmodus arbeitet, wenn das Endgerät in den Energiesparmodus geschaltet wird, wobei der mindestens eine Prozessor einen oder mehrere Kerne arbeitet umfasst, wobei mindestens ein Kern von dem mindestens einen Prozessor im Bereitschaftsmodus ist, wenn der mindestens eine Prozessor im Prozessor-Energiesparmodus arbeitet, wobei der mindestens eine Kern des mindestens einen Prozessors nicht im Bereitschaftsmodus ist, wenn der mindestens eine Prozessor nicht im Prozessor-Energiesparmodus arbeitet.

4. Verfahren nach einem der vorangehenden Ansprüche, wobei die Interface Engine einen Menüpunkt (174), der einem notwendigen Computer-verarbeitbaren Eingabefeld (182c) der Liste entspricht, auf eine Weise anzeigt, die sich von einem Menüpunkt (175) unterscheidet, der einem optionalen Computer-verarbeitbaren Eingabefeld (183c) der Liste entspricht.

5. Verfahren nach einem der vorangehenden Ansprüche, wobei der Inhalt des maschinenlesbaren elektronischen Dokuments ferner mögliche Werte für mindestens eines der Computer-verarbeitbaren Eingabefelder umfasst, wobei das Verfahren nach Anspruch 1 ferner umfasst:
nach Abschluss des Herunterladens des maschinenlesbaren elektronischen Dokuments: Bewirken, dass die Interface Engine am Endgerät die möglichen Werte aus dem Inhalt des maschinenlesbaren elektronischen Dokuments extrahiert;
wobei das Eingeben der Anwenderdaten in die entsprechenden von den mehreren Computer-verarbeitbaren Eingabefelder unter Verwendung des Eingabemenüs ferner umfasst: Bewirken, dass die Interface Engine als Reaktion auf eine Auswahl eines Menüpunkts (176) in dem Eingabemenü, der dem mindestens einen von den Computer-verarbeitbaren Eingabefelder entspricht, die möglichen Werte (177, 178) für das mindestens eine von den Computer-verarbeitbaren Eingabefelder (184c) anzeigt; und
Bewirken, dass die Interface Engine als Reaktion auf eine Auswahl mindestens eines von den möglichen Werten den mindestens einen möglichen Wert in dem mindestens einen von den Computer-verarbeitbaren Eingabefeldern des maschinenlesbaren elektronischen Dokuments am Endgerät speichert.

6. Verfahren nach einem der vorangehenden Ansprüche, wobei das Eingeben der Anwenderdaten in die entsprechenden von den mehreren Computer-verarbeitbaren Eingabefelder unter Verwendung des Eingabemenüs ferner umfasst:
Bewirken, dass die Interface Engine als Reaktion auf eine Auswahl eines Menüpunkts (176) im Eingabemenü, der dem einen von den Computer-verarbeitbaren Eingabefeldern entspricht, zumindest ein Fragment einer symbolischen Darstellung des maschinenlesbaren elektronischen Dokuments anzeigt, wobei das Fragment der symbolischen Darstellung (179) eine symbolische Darstellung (188) des einen von den Computer-verarbeitbaren Eingabefeldern (184c) umfasst; und
Bewirken, dass die Interface Engine als Reaktion auf eine Auswahl eines anderen Menüpunkts in dem Eingabemenü, der einem anderen von den Computer-verarbeitbaren Eingabefeldern entspricht, direkt dazu übergeht, zumindest ein anderes Fragment der symbolischen Darstellung anzuzeigen, wobei das andere Fragment der symbolischen Darstellung eine symbolische Darstellung des anderen von den Computer-verarbeitbaren Eingabefelder (184c) umfasst.

7. Verfahren nach einem der vorangehenden Ansprüche, wobei das Eingeben der Anwenderdaten in die entsprechenden von den mehreren Computer-verarbeitbaren Eingabefelder unter Verwendung des Eingabemenüs ferner umfasst:
Bewirken, dass die Interface Engine als Reaktion auf eine Auswahl eines Menüpunkts (176) im Eingabemenü, der einem von den Computer-verarbeitbaren Eingabefeldern entspricht, zumindest einen Teil von erläuternden Informationen (189; 184b) zu dem einen von den Computer-verarbeitbaren Eingabefeldern (184c) anzeigt; und
Bewirken, dass die Interface Engine als Reaktion auf eine Auswahl eines anderen Menüpunkts im Eingabemenü, der einem anderen von den Computer-verarbeitbaren Eingabefeldern entspricht, direkt dazu übergeht, zumindest einen Teil von anderen erläuternden Informationen zu dem anderen von den Computer-verarbeitbaren Eingabefeldern anzuzeigen.

8. Verfahren nach einem der vorangehenden Ansprüche, ferner umfassend, dass die Interface Engine veranlasst wird, einen Menüpunkt des Eingabemenüs, der einem der Computer-verarbeitbaren Eingabefelder entspricht, an ein Ende des Eingabemenüs zu verschieben, nachdem Anwenderdaten, die in dem einen von den Computer-verarbeitbaren Eingabefeldern verlangt werden, in dem einen von den Computer-verarbeitbaren Eingabefeldern des maschinenlesbaren elektronischen Dokuments auf dem Endgerät gespeichert worden sind.

9. Verfahren nach einem der vorangehenden Ansprüche, wobei bewirkt wird, dass die Interface Engine die Liste aus einem generischen Computer-verarbeitbaren Eingabefeld heraus anzeigt.

10. Verfahren nach einem der vorangehenden Ansprüche, wobei das Endgerät eine mobile Vorrichtung ist und das Gegen-Endgerät ein Server ist.

11. Nicht-transitorisches, computerlesbares Speichermedium, das ein Computerprogramm für die Durchführung eines Telekommunikationsverfahrens zwischen einem Endgerät (170) und einem Gegen-Endgerät (190) enthält, wobei das Endgerät und das Gegen-Endgerät für eine gegenseitige Kommunikation über ein zelluläres digitales Telekommunikationsnetz (180) ausgelegt sind, wobei das Endgerät ein Display (171), eine Interface Engine (173) und eine Batterie (174) zum Bestromen des Endgeräts umfasst, wobei das Endgerät dafür ausgelegt ist, in einen Energiesparmodus zu schalten durch Außerkraftsetzen einer Funktion, mit der elektronische Dokumente unter Verwendung von Bildlaufanzeigefunktionen (177) auf dem Display des Endgeräts angezeigt werden, wobei das Verfahren umfasst:
Herunterladen eines maschinenlesbaren elektronischen Dokuments (180) vom Gegen-Endgerät über das zelluläre digitale Telekommunikationsnetz auf das Endgerät, wobei ein Inhalt des maschinenlesbaren elektronischen Dokuments mehrere Computer-verarbeitbare Eingabefelder (181c, 182c, 183c, 184c) für die Eingabe von Anwenderdaten, einen Namen für jedes der Computer-verarbeitbare Eingabefelder (181a, 182a, 183a, 184a) und erläuternde Informationen zu jedem der Computer-verarbeitbaren Eingabefelder (181b, 182b, 183b, 184b) umfasst;
nach Abschluss des Herunterladens des maschinenlesbaren elektronischen Dokuments: Bewirken, dass die Interface Engine eine Liste der mehreren Computer-verarbeitbaren Eingabefelder und der Namen der Computer-verarbeitbaren Eingabefelder aus dem Inhalt des maschinenlesbaren elektronischen Dokuments extrahiert;
nach Abschluss des Herunterladens des maschinenlesbaren elektronischen Dokuments: Bewirken, dass das Endgerät in einen Energiesparmodus schaltet durch Außerkraftsetzen der Bildlaufanzeigefunktion des Endgeräte-Display;
Anzeigen der Liste der mehreren Computer-verarbeitbaren Eingabefelder und der Namen der Computer-verarbeitbaren Felder als Eingabemenü (172) auf dem Display durch die Interface Engine, wobei das Eingabemenü Menüpunkte (173, 174, 175, 176) umfasst, wobei jedes Computer-verarbeitbare Eingabefeld und der entsprechende Name des Computer-verarbeitbaren Eingabefelds einen eindeutig zugewiesenen Menüpunkt aufweisen;
Eingeben der Anwenderdaten in die entsprechenden von den mehreren Computer-verarbeitbaren Eingabefeldern unter Verwendung des Eingabemenüs;
Senden der Anwenderdaten durch das Endgerät über das zelluläre digitale Telekommunikationsnetz an das Gegen-Endgerät.

12. Nicht-transitorisches, computerlesbares Speichermedium nach Anspruch 11, wobei die Interface Engine einen Menüpunkt (174), der einem notwendigen Computer-verarbeitbaren Eingabefeld (182c) der Liste entspricht, auf eine Weise anzeigt, die sich von einem Menüpunkt (175) unterscheidet, der einem optionalen Computer-verarbeitbaren Eingabefeld (183c) der Liste entspricht.

13. Nicht-transitorisches, computerlesbares Speichermedium nach Anspruch 11 oder 12, wobei der Inhalt des maschinenlesbaren elektronischen Dokuments ferner mögliche Werte für mindestens eines der Computer-verarbeitbaren Eingabefelder (184c) umfasst, wobei das Verfahren ferner umfasst:
nach Abschluss des Herunterladens des maschinenlesbaren elektronischen Dokuments: Bewirken, dass die Interface Engine am Endgerät die möglichen Werte aus dem Inhalt des maschinenlesbaren elektronischen Dokuments extrahiert;
wobei das Eingeben der Anwenderdaten in die entsprechenden von den mehreren Computer-verarbeitbaren Eingabefelder unter Verwendung des Eingabemenüs ferner umfasst: Bewirken, dass die Interface Engine als Reaktion auf eine Auswahl eines Menüpunkts (176) in dem Eingabemenü, der dem mindestens einen von den Computer-verarbeitbaren Eingabefeldern entspricht, die möglichen Werte (178, 177) für das mindestens eine von den Computer-verarbeitbaren Eingabefeldern anzeigt; und
Bewirken, dass die Interface Engine als Reaktion auf eine Auswahl mindestens eines von den möglichen Werten den mindestens einen möglichen Wert in dem mindestens einen von den Computer-verarbeitbaren Eingabefeldern des maschinenlesbaren elektronischen Dokuments am Endgerät speichert.

14. Nicht-transitorisches, computerlesbares Speichermedium nach einem der Ansprüche 11, 12 oder 13, wobei das Eingeben der Anwenderdaten in die entsprechenden von den mehreren Computer-verarbeitbaren Eingabefeldern unter Verwendung des Eingabemenüs ferner umfasst:
Bewirken, dass die Interface Engine als Reaktion auf eine Auswahl eines Menüpunkts (176) im Eingabemenü, der dem einen von den Computer-verarbeitbaren Eingabefeldern entspricht, zumindest ein Fragment einer symbolischen Darstellung des maschinenlesbaren elektronischen Dokuments anzeigt, wobei das Fragment der symbolischen Darstellung (179) eine symbolische Darstellung (188) des einen von den Computer-verarbeitbaren Eingabefeldern (184c) umfasst; und
Bewirken, dass die Interface Engine als Reaktion auf eine Auswahl eines anderen Menüpunkts in dem Eingabemenü, der einem anderen von den Computer-verarbeitbaren Eingabefeldern entspricht, direkt dazu übergeht, zumindest ein anderes Fragment der symbolischen Darstellung anzuzeigen, wobei das andere Fragment der symbolischen Darstellung eine symbolische Darstellung des anderen von den Computer-verarbeitbaren Eingabefeldern umfasst.

15. Nicht-transitorisches, computerlesbares Speichermedium nach einem der Ansprüche 11, 12, 13 oder 14, wobei das Eingeben der Anwenderdaten in die entsprechenden von den mehreren Computer-verarbeitbaren Eingabefeldern unter Verwendung des Eingabemenüs ferner umfasst:
Bewirken, dass die Interface Engine als Reaktion auf eine Auswahl eines Menüpunkts (176) im Eingabemenü, der einem von den Computer-verarbeitbaren Eingabefeldern entspricht, zumindest einen Teil von erläuternden Informationen (189; 184b) zu dem einen von den Computer-verarbeitbaren Eingabefeldern (184c) anzeigt; und
Bewirken, dass die Interface Engine als Reaktion auf eine Auswahl eines anderen Menüpunkts im Eingabemenü, der einem anderen von den Computer-verarbeitbaren Eingabefeldern entspricht, direkt dazu übergeht, zumindest einen Teil von anderen erläuternden Informationen zu dem anderen von den Computer-verarbeitbaren Eingabefeldern anzuzeigen.

16. Nicht-transitorisches, computerlesbares Speichermedium nach einem der Ansprüche 11, 12, 13, 14 oder 15, wobei das Verfahren ferner umfasst, dass die Interface Engine veranlasst wird, einen Menüpunkt des Eingabemenüs, der einem von den Computer-verarbeitbaren Eingabefeldern entspricht, an ein Ende des Eingabemenüs zu verschieben, nachdem Anwenderdaten, die in dem einen von den Computer-verarbeitbaren Eingabefeldern verlangt werden, in dem einen von den Computer-verarbeitbaren Eingabefeldern des maschinenlesbaren elektronischen Dokuments auf dem Endgerät gespeichert worden sind.

17. Nicht-transitorisches, computerlesbares Speichermedium nach einem der Ansprüche 11, 12, 13, 14, 15 oder 16, wobei die Interface Engine veranlasst wird, die Liste aus einem generischen Computer-verarbeitbaren Eingabefeld heraus anzuzeigen.

18. Nicht-transitorisches, computerlesbares Speichermedium nach einem der Ansprüche 11, 12, 13, 14, 15, 16 oder 17, wobei das Endgerät eine mobile Vorrichtung ist und das Gegen-Endgerät ein Server ist.

19. Endgerät (170) für eine Telekommunikation mit einem Gegen-Endgerät (190) über ein zelluläres digitales Mobilkommunikationsnetz (180), umfassend: einen oder mehrere Prozessoren (179);
ein Display (171) zum Anzeigen von elektronischen Dokumenten, wobei das Display eine Bildlaufanzeigefunktion zum Anzeigen elektronischer Dokumente aufweist; eine Batterie (174) zum Bestromen des Endgeräts;
ein Software-Programm, das an dem Endgerät ausführbar ist, wobei das Software-Programm dafür ausgelegt ist:
eine Interface Engine (174) bereitzustellen;
ein maschinenlesbares elektronisches Dokument (180) vom Gegen-Endgerät über das zelluläre digitale Telekommunikationsnetz auf das Endgerät herunterzuladen, wobei ein Inhalt des maschinenlesbaren elektronischen Dokuments mehrere Computer-verarbeitbare Eingabefelder (181c, 182c, 183c, 184c) für die Eingabe von Anwenderdaten, einen Namen für jedes der Computer-verarbeitbaren Eingabefelder (181a, 182a, 183a, 184a) und erläuternde Informationen zu jedem der Computer-verarbeitbaren Eingabefelder (181b, 182b, 183b, 184b) umfasst;
zu bewirken, dass die Interface Engine nach Abschluss des Herunterladens des maschinenlesbaren elektronischen Dokuments eine Liste der mehreren Computer-verarbeitbaren Eingabefelder und der Namen der Computer-verarbeitbaren Eingabefelder aus dem Inhalt des maschinenlesbaren elektronischen Dokuments extrahiert;
zu bewirken, dass das Endgerät nach Abschluss des Herunterladens des maschinenlesbaren elektronischen Dokuments in einen Energiesparmodus schaltet durch Außerkraftsetzen der Bildlaufanzeigefunktion, wobei das Endgerät dazu dient, durch Außerkraftsetzen der Bildlaufanzeigefunktion (177) in den Energiesparmodus zu schalten;
die Liste der mehreren Computer-verarbeitbaren Eingabefelder und der Namen der Computer-verarbeitbaren Eingabefelder als Eingabemenü (172) auf der Anzeige anzuzeigen, wobei das Eingabemenü Menüpunkte (173, 174, 175, 176) umfasst, wobei jedes Computer-verarbeitbare Eingabefeld und der entsprechende Name von jedem der Computer-verarbeitbaren Eingabefelder einen eindeutig zugewiesenen Menüpunkt aufweisen;
die Anwenderdaten unter Verwendung des Eingabemenüs in die entsprechenden von den mehreren Computer-verarbeitbaren Eingabefelder einzugeben;
die Anwenderdaten durch das Endgerät über das zelluläre digitale Telekommunikationsnetz an das Gegen-Endgerät zu senden.

20. Endgerät nach Anspruch 19, wobei das Software-Programm ferner dafür ausgelegt ist:
zu bewirken, dass die Interface Engine einen Menüpunkt (174), der einem notwendigen Computer-verarbeitbaren Eingabefeld (182c) der Liste entspricht, auf eine Weise anzeigt, die sich von einem Menüpunkt (175) unterscheidet, der einem optionalen Computer-verarbeitbaren Eingabefeld (183c) der Liste entspricht.

21. Endgerät nach Anspruch 19 oder 20, wobei der Inhalt des maschinenlesbaren elektronischen Dokuments ferner mögliche Werte für mindestens eines der Computer-verarbeitbaren Eingabefelder umfasst, wobei das Verfahren ferner dafür ausgelegt ist:
zu bewirken, dass die Interface Engine auf dem Endgerät nach Abschluss des Herunterladens des maschinenlesbaren elektronischen Dokuments die möglichen Werte aus dem Inhalt des maschinenlesbaren elektronischen Dokuments extrahiert;
wobei das Eingeben der Anwenderdaten in die entsprechenden von den mehreren Computer-verarbeitbaren Eingabefeldern unter Verwendung des Eingabemenüs ferner umfasst: Bewirken, dass die Interface Engine als Reaktion auf eine Auswahl eines Menüpunkts (176) in dem Eingabemenü, der dem mindestens einen von den Computer-verarbeitbaren Eingabefeldern entspricht, die möglichen Werte (177.178, 178) für das mindestens eine von den Computer-verarbeitbaren Eingabefeldern (184c) anzeigt; und
zu bewirken, dass die Interface Engine als Reaktion auf eine Auswahl mindestens eines von den möglichen Werten den mindestens einen möglichen Wert in dem mindestens einen von den Computer-verarbeitbaren Eingabefeldern des maschinenlesbaren elektronischen Dokuments am Endgerät speichert.

22. Endgerät nach einem der Ansprüche 19, 20 oder 21, wobei das Eingeben der Anwenderdaten in die entsprechenden von den mehreren Computer-verarbeitbaren Eingabefeldern unter Verwendung des Eingabemenüs ferner umfasst:
Bewirken, dass die Interface Engine als Reaktion auf eine Auswahl eines Menüpunkts (176) im Eingabemenü, der dem einen von den Computer-verarbeitbaren Eingabefeldern entspricht, zumindest ein Fragment einer symbolischen Darstellung des maschinenlesbaren elektronischen Dokuments anzeigt, wobei das Fragment der symbolischen Darstellung (179) eine symbolische Darstellung (188) des einen von den Computer-verarbeitbaren Eingabefeldern (184c) umfasst; und
Bewirken, dass die Interface Engine als Reaktion auf eine Auswahl eines anderen Menüpunkts in dem Eingabemenü, der einem anderen von den Computer-verarbeitbaren Eingabefeldern entspricht, direkt dazu übergeht, zumindest ein anderes Fragment der symbolischen Darstellung anzuzeigen, wobei das andere Fragment der symbolischen Darstellung eine symbolische Darstellung des anderen von den Computer-verarbeitbaren Eingabefeldern umfasst.

23. Endgerät nach einem der Ansprüche 19, 20, 21 oder 22, wobei das Eingeben der Anwenderdaten in die entsprechenden von den mehreren Computer-verarbeitbaren Eingabefeldern unter Verwendung des Eingabemenüs ferner umfasst:
Bewirken, dass die Interface Engine als Reaktion auf eine Auswahl eines Menüpunkts (176) im Eingabemenü, der einem von den Computer-verarbeitbaren Eingabefeldern entspricht, zumindest einen Teil von erläuternden Informationen (189; 184b) zu dem einen von den Computer-verarbeitbaren Eingabefeldern (184c) anzeigt; und
Bewirken, dass die Interface Engine als Reaktion auf eine Auswahl eines anderen Menüpunkts im Eingabemenü, der einem anderen von den Computer-verarbeitbaren Eingabefeldern entspricht, direkt dazu übergeht, zumindest einen Teil von anderen erläuternden Informationen zu dem anderen von den Computer-verarbeitbaren Eingabefeldern anzuzeigen.

24. Endgerät nach Anspruch 19, 20, 21, 22 oder 23, wobei das Software-Programm ferner dafür ausgelegt ist:
zu bewirken, dass die Interface Engine einen Menüpunkt des Eingabemenüs, das einem der Computer-verarbeitbaren Eingabefeldern entspricht, an ein Ende des Eingabemenüs verschiebt, nachdem Anwenderdaten, die in dem einen von den Computer-verarbeitbaren Eingabefeldern verlangt werden, in dem einen von den Computer-verarbeitbaren Eingabefeldern des maschinenlesbaren elektronischen Dokuments auf dem Endgerät gespeichert worden sind.

25. Endgerät nach einem der Ansprüche 19, 20, 21, 22, 23 oder 24, wobei das Software-Programm ferner dafür ausgelegt ist, die Interface Engine zu veranlassen, die Liste aus einem generischen, Computer-verarbeitbaren Eingabefeld heraus anzuzeigen.

26. Endgerät nach einem der Ansprüche 19, 20, 21, 22, 23 oder 25, wobei das Endgerät eine mobile Vorrichtung ist und das Gegen-Endgerät ein Server ist.

## Revendications

1. Procédé de télécommunication entre un terminal final (170) et un terminal distant (190), dans lequel le terminal final et le terminal distant sont opérationnels pour communiquer l'un avec l'autre par le biais d'un réseau de télécommunications numérique cellulaire (180), dans lequel le terminal distant comprend un écran (171), un moteur d'interface (173) et une batterie (174) pour l'alimentation électrique du terminal final, dans lequel le terminal final est opérationnel pour passer dans un mode économie d'énergie en désactivant une fonctionnalité d'affichage de documents électroniques à l'aide de fonctions d'affichage à défilement (177) sur l'écran du terminal final, le procédé comprenant :
le téléchargement, vers le terminal final, d'un document électronique exploitable par machine (180) à partir du terminal distant, par le biais du réseau de télécommunications numérique cellulaire, dans lequel un contenu du document électronique exploitable par machine comprend une pluralité de champs d'entrée traitables par ordinateur (181c, 182c, 183c, 184c) pour l'entrée de données d'utilisateur, un nom pour chacun des champs d'entrée traitables par ordinateur (181a, 182a, 183a, 184a) et une information explicative pour chacun des champs d'entrée traitables par ordinateur (181b, 182b, 183b, 184b) ;
à la fin du téléchargement du document électronique exploitable par machine, l'extraction, par le moteur d'interface, d'une liste de la pluralité de champs d'entrée traitables par ordinateur et des noms des champs traitables par ordinateur, à partir du contenu du document électronique exploitable par machine ;
à la fin du téléchargement du document électronique exploitable par machine, le passage du terminal final dans un mode économie d'énergie en désactivant la fonctionnalité d'affichage à défilement de l'écran du terminal final ;
l'affichage de la liste de la pluralité de champs d'entrée traitables par ordinateur et de noms des champs traitables par ordinateur, sous la forme d'un menu d'entrée (172) sur l'écran, par le moteur d'interface, le menu d'entrée comprenant des options de menu (173, 174, 175, 176), dans lequel chaque champ d'entrée traitable par ordinateur et le nom correspondant de chaque champ d'entrée traitable par ordinateur présentent une option de menu dédiée unique ;
l'entrée des données d'utilisateur dans les champs respectifs parmi la pluralité de champs d'entrée traitables par ordinateur, à l'aide du menu d'entrée ;
l'envoi des données d'utilisateur au terminal distant par le terminal final par le biais du réseau de télécommunications numérique cellulaire.

2. Procédé de télécommunication selon la revendication 1, dans lequel le terminal final comprend en outre un ou plusieurs processeurs (179), dans lequel au moins un processeur fonctionne dans un mode économie d'énergie de processeur lorsque le terminal final est commuté dans le mode économie d'énergie, dans lequel l'au moins un processeur fonctionne à la première fréquence d'horloge lorsque l'au moins un processeur fonctionne dans le mode économie d'énergie de processeur, dans lequel l'au moins un processeur fonctionne à la deuxième fréquence d'horloge lorsque l'au moins un processeur ne fonctionne pas dans le mode économie d'énergie de processeur, dans lequel la deuxième fréquence d'horloge est supérieure à la première fréquence d'horloge.

3. Procédé de télécommunication selon la revendication 1, dans lequel le terminal final comprend en outre un ou plusieurs processeur (179), dans lequel l'au moins un ou plusieurs coeurs, dans lequel l'au moins un coeur de l'au moins un processeur se trouve en mode veille lorsque l'au moins un processeur fonctionne en mode économie d'énergie de processeur, dans lequel l'au moins un coeur de l'au moins un processeur ne se trouve pas en mode veille lorsque l'au moins un processeur ne fonctionne pas en mode économie d'énergie de processeur.

4. Procédé selon l'une quelconque des revendications précédentes, dans lequel le moteur d'interface affiche une option de menu (174) correspondant à un champ d'entrée traitable par ordinateur requis (182c) de la liste d'une autre manière qu'une option de menu (175) correspondant à un champ d'entrée traitable par ordinateur facultatif (183c) de la liste.

5. Procédé selon l'une quelconque des revendications précédentes, dans lequel le contenu du document électronique exploitable par machine comprend en outre des valeurs possibles pour au moins l'un des champs d'entrée traitables par ordinateur, le procédé selon la revendication 1 comprenant en outre :
à la fin du téléchargement du document électronique exploitable par machine, l'extraction des valeurs possibles par le moteur d'interface sur le terminal final, à partir du contenu du document électronique exploitable par machine ;
dans lequel l'entrée des données d'utilisateur dans les champs respectifs parmi la pluralité de champs d'entrée traitables par ordinateur à l'aide du menu d'entrée comprend en outre :
en réponse à une sélection d'une option de menu (176) dans le menu d'entrée correspondant à l'au moins un des champs d'entrée traitables par ordinateur, l'affichage des valeurs possibles (177, 178) par le moteur d'interface, pour l'au moins un des champs d'entrée traitables par ordinateur (184c) ; et
en réponse à une sélection d'au moins l'une des valeurs possibles, le stockage de l'au moins une valeur possible sélectionnée par le moteur d'interface dans l'au moins un des champs d'entrée traitables par ordinateur du document électronique exploitable par machine sur le terminal final.

6. Procédé selon l'une quelconque des revendications précédentes, dans lequel l'entrée des données d'utilisateur dans les champs respectifs parmi la pluralité de champs d'entrée traitables par ordinateur à l'aide du menu d'entrée comprend :
en réponse à une sélection d'une option de menu (176) dans le menu d'entrée correspondant à l'un des champs d'entrée traitables par ordinateur, l'affichage d'au moins un fragment d'une représentation symbolique du document électronique exploitable par machine par le moteur d'interface, dans lequel le fragment de la représentation symbolique (179) comprend une représentation symbolique (188) de l'un des champs d'entrée traitables par ordinateur (184c) ; et
en réponse à une sélection d'une autre option de menu dans le menu d'entrée correspondant à un autre des champs d'entrée traitables par ordinateur, le passage direct du moteur d'interface à l'affichage d'au moins un autre fragment de la représentation symbolique, dans lequel l'autre fragment de la représentation symbolique comprend une représentation symbolique d'un autre des champs d'entrée traitables par ordinateur (184c).

7. Procédé selon l'une quelconque des revendications précédentes, dans lequel l'entrée des données d'utilisateur dans les champs respectifs parmi la pluralité de champs d'entrée traitables par ordinateur à l'aide du menu d'entrée comprend en outre :
en réponse à une sélection d'une option de menu (176) dans le menu d'entrée correspondant à l'un des champs d'entrée traitables par ordinateur (184c), l'affichage d'au moins une partie d'une information explicative (189 ; 184b) sur l'un des champs d'entrée traitables par ordinateur ; et
en réponse à une sélection d'une autre option de menu dans le menu d'entrée correspondant à un autre des champs d'entrée traitables par ordinateur, le passage direct du moteur d'interface à l'affichage d'au moins une partie d'une autre information explicative de l'autre des champs d'entrée traitables par ordinateur.

8. Procédé selon l'une quelconque des revendications précédentes, comprenant en outre le déplacement d'une option de menu du menu d'entrée correspondant à l'un des champs d'entrée traitables par ordinateur, par le moteur d'interface, vers une extrémité du menu d'entrée, une fois que des données d'utilisateur requises dans ledit champ d'entrée traitable par ordinateur ont été stockées dans ledit champ d'entrée traitable par ordinateur du document électronique exploitable par machine sur le terminal final.

9. Procédé selon l'une quelconque des revendications précédentes, dans lequel le moteur d'interface est amené à afficher la liste à partir d'un champ d'entrée générique traitable par ordinateur.

10. Procédé selon l'une quelconque des revendications précédentes, dans lequel le terminal final est un dispositif mobile et le terminal distant est un serveur.

11. Support de stockage non-transitoire lisible par ordinateur, contenant un programme informatique pour l'exécution d'un procédé de télécommunication entre un terminal final (170) et un terminal distant (190), dans lequel le terminal final et le terminal distant sont opérationnels pour communiquer l'un avec l'autre par le biais d'un réseau de télécommunications numérique cellulaire (180), dans lequel le terminal final comprend un écran (171), un moteur d'interface (173) et une batterie (174) pour alimenter le terminal final en électricité, dans lequel le terminal final est opérationnel pour passer dans un mode économie d'énergie en désactivant une fonctionnalité d'affichage de documents électroniques à l'aide de fonctions d'affichage à défilement (177) sur l'écran du terminal final, le procédé comprenant :
le téléchargement, vers le terminal final, d'un document électronique exploitable par machine (180) à partir du terminal distant, par le biais du réseau de télécommunications numérique cellulaire, dans lequel un contenu du document électronique exploitable par machine comprend une pluralité de champs d'entrée traitables par ordinateur (181c, 182c, 183c, 184c) pour l'entrée de données d'utilisateur, un nom pour chacun des champs d'entrée traitables par ordinateur (181a, 182a, 183a, 184a) et une information explicative pour chacun des champs d'entrée traitables par ordinateur (181b, 182b, 183b, 184b) ;
à la fin du téléchargement du document électronique exploitable par machine, l'extraction, par le moteur d'interface, d'une liste de la pluralité de champs d'entrée traitables par ordinateur et des noms des champs traitables par ordinateur, à partir du contenu du document électronique exploitable par machine ;
à la fin du téléchargement du document électronique exploitable par machine, le passage du terminal final dans un mode économie d'énergie en désactivant la fonctionnalité d'affichage à défilement de l'écran du terminal final ;
l'affichage de la liste de la pluralité de champs d'entrée traitables par ordinateur et de noms des champs traitables par ordinateur, sous la forme d'un menu d'entrée (172) sur l'écran, par le moteur d'interface, le menu d'entrée comprenant des options de menu (173, 174, 175, 176), dans lequel chaque champ d'entrée traitable par ordinateur et le nom correspondant de chaque champ d'entrée traitable par ordinateur présentent une option de menu dédiée unique ;
l'entrée des données d'utilisateur dans les champs respectifs parmi la pluralité de champs d'entrée traitables par ordinateur, à l'aide du menu d'entrée ;
l'envoi des données d'utilisateur au terminal distant par le terminal final par le biais du réseau de télécommunications numérique cellulaire.

12. Support de stockage non-transitoire lisible par ordinateur selon la revendication 11, dans lequel le moteur d'interface affiche une option de menu (174) correspondant à un champ d'entrée traitable par ordinateur requis (182c) de la liste d'une autre manière qu'une option de menu (175) correspondant à un champ d'entrée traitable par ordinateur facultatif (183c) de la liste.

13. Support de stockage non-transitoire lisible par ordinateur selon la revendication 11 ou 12, dans lequel le contenu du document électronique exploitable par machine comprend en outre des valeurs possibles pour au moins l'un des champs d'entrée traitables par ordinateur, dans lequel le procédé comprend en outre :
à la fin du téléchargement du document électronique exploitable par machine, l'extraction des valeurs possibles par le moteur d'interface sur le terminal final, à partir du contenu du document électronique exploitable par machine ;
dans lequel l'entrée des données d'utilisateur dans les champs respectifs parmi la pluralité de champs d'entrée traitables par ordinateur à l'aide du menu d'entrée comprend en outre :
en réponse à une sélection d'une option de menu (176) dans le menu d'entrée correspondant à l'au moins un des champs d'entrée traitables par ordinateur (184c), l'affichage des valeurs possibles (177, 178) par le moteur d'interface, pour l'au moins un des champs d'entrée traitables par ordinateur ; et
en réponse à une sélection d'au moins l'une des valeurs possibles, le stockage de l'au moins une valeur possible sélectionnée par le moteur d'interface dans l'au moins un des champs d'entrée traitables par ordinateur du document électronique exploitable par machine sur le terminal final.

14. Support de stockage non-transitoire lisible par ordinateur selon les revendications 11, 12 ou 13, dans lequel l'entrée des données d'utilisateur dans les champs respectifs parmi la pluralité de champs d'entrée traitables par ordinateur à l'aide du menu d'entrée comprend :
en réponse à une sélection d'une option de menu (176) dans le menu d'entrée correspondant à l'un des champs d'entrée traitables par ordinateur, l'affichage d'au moins un fragment d'une représentation symbolique (179) du document électronique exploitable par machine par le moteur d'interface, dans lequel le fragment de la représentation symbolique comprend une représentation symbolique (188) de l'un des champs d'entrée traitables par ordinateur (184c) ; et
en réponse à une sélection d'une autre option de menu dans le menu d'entrée correspondant à un autre des champs d'entrée traitables par ordinateur, le passage direct du moteur d'interface à l'affichage d'au moins un autre fragment de la représentation symbolique, dans lequel l'autre fragment de la représentation symbolique comprend une représentation symbolique d'un autre des champs d'entrée traitables par ordinateur.

15. Support de stockage non-transitoire lisible par ordinateur selon les revendications 11, 12, 13 ou 14, dans lequel l'entrée des données d'utilisateur dans les champs respectifs parmi les champs d'entrée traitables par ordinateur à l'aide du menu d'entrée comprend en outre :
en réponse à une sélection d'une option de menu (176) dans le menu d'entrée correspondant à l'un des champs d'entrée traitables par ordinateur (184c), l'affichage d'au moins une partie d'une information explicative (189 ; 184b) sur l'un des champs d'entrée traitables par ordinateur ; et
en réponse à une sélection d'une autre option de menu dans le menu d'entrée correspondant à un autre des champs d'entrée traitables par ordinateur, le passage direct du moteur d'interface à l'affichage d'au moins une partie d'une autre information explicative de l'autre des champs d'entrée traitables par ordinateur.

16. Support de stockage non-transitoire lisible par ordinateur selon les revendications 11, 12, 13, 14 ou 15, dans lequel le procédé comprend en outre le déplacement d'une option de menu du menu d'entrée correspondant à l'un des champs d'entrée traitables par ordinateur, par le moteur d'interface, vers une extrémité du menu d'entrée, une fois que des données d'utilisateur requises dans ledit champ d'entrée traitable par ordinateur ont été stockées dans ledit champ d'entrée traitable par ordinateur du document électronique exploitable par machine sur le terminal final.

17. Support de stockage non-transitoire lisible par ordinateur selon les revendications 11, 12, 13, 14, 15 ou 16, dans lequel le moteur d'interface est incité à afficher la liste à partir d'un champ d'entrée générique traitable par ordinateur.

18. Support de stockage non-transitoire lisible par ordinateur selon les revendications 11, 12, 13, 14, 15, 16 ou 17, dans lequel le terminal final est un dispositif mobile et le terminal distant est un serveur.

19. Terminal final (170) pour la télécommunication avec un terminal distant (190) par le biais d'un réseau de télécommunications numérique cellulaire (180), comprenant :
un ou plusieurs processeurs (179) ;
un écran (171) pour l'affichage de documents électroniques, dans lequel l'écran présente une fonctionnalité d'affichage par défilement pour l'affichage de documents électroniques ;
une batterie (174) pour l'alimentation électrique du terminal final ;
un logiciel exécutable sur ledit terminal final, le logiciel étant configuré pour :
fournir un moteur d'interface (174) ;
télécharger un document électronique exploitable par machine (180) vers le terminal final, à partir du terminal distant, par le biais du réseau de télécommunications numérique cellulaire, dans lequel un contenu du document électronique exploitable par machine comprend une pluralité de champs d'entrée traitables par ordinateur (181c, 182c, 183c, 184c) pour l'entrée de données d'utilisateur, un nom pour chacun des champs d'entrée traitables par ordinateur (181a, 182a, 183a, 184a) et une information explicative pour chacun des champs d'entrée traitables par ordinateur (181b, 182b, 183b, 184b) ;
à la fin du téléchargement du document électronique exploitable par machine, amener le moteur d'interface à extraire une liste de la pluralité de champs d'entrée traitables par ordinateur et des noms des champs traitables par ordinateur, à partir du contenu du document électronique exploitable par machine ;
à la fin du téléchargement du document électronique exploitable par machine, faire passer le terminal final dans un mode économie d'énergie en désactivant la fonctionnalité d'affichage à défilement, le terminal final étant opérationnel pour passer en mode économie d'énergie en désactivant la fonctionnalité d'affichage par défilement (177) ;
afficher la liste de la pluralité de champs d'entrée traitables par ordinateur et les noms des champs traitables par ordinateur, sous la forme d'un menu d'entrée (172) sur l'écran, dans lequel le menu d'entrée comprend des options de menu (173, 174, 175, 176), dans lequel chaque champ d'entrée traitable par ordinateur et le nom correspondant de chaque champ d'entrée traitable par ordinateur présentent une option de menu dédiée unique ;
entrer les données d'utilisateur dans les champs respectifs parmi la pluralité de champs d'entrée traitables par ordinateur, à l'aide du menu d'entrée ;
envoyer les données d'utilisateur au terminal distant par le terminal final par le biais du réseau de télécommunications numérique cellulaire.

20. Terminal final selon la revendication 19, dans lequel le logiciel est en outre configuré pour :
amener le moteur d'interface à afficher une option de menu (174) correspondant à un champ d'entrée traitable par ordinateur requis (182c) de la liste d'une autre manière qu'une option de menu (175) correspondant à un champ d'entrée traitable par ordinateur facultatif (183c).

21. Terminal final selon la revendication 19 ou 20, dans lequel le contenu du document électronique exploitable par machine comprend en outre des valeurs possibles pour au moins l'un des champs d'entrée traitables par ordinateur, dans lequel le logiciel est en outre configuré pour :
à la fin du téléchargement du document électronique exploitable par machine, amener le moteur d'interface sur le terminal final à extraire les valeurs possibles à partir du contenu du document électronique exploitable par machine ;
dans lequel l'entrée des données d'utilisateur dans les champs respectifs parmi la pluralité de champs d'entrée traitables par ordinateur à l'aide du menu d'entrée comprend en outre :
en réponse à une sélection d'une option de menu (176) dans le menu d'entrée correspondant à l'au moins un des champs d'entrée traitables par ordinateur,
l'affichage des valeurs possibles (177, 178) par le moteur d'interface, pour l'au moins un des champs d'entrée traitables par ordinateur (184c) ; et
en réponse à une sélection d'au moins l'une des valeurs possibles, amener le moteur d'interface à stocker l'au moins une valeur possible sélectionnée par le moteur d'interface dans l'au moins un des champs d'entrée traitables par ordinateur du document électronique exploitable par machine sur le terminal final.

22. Terminal final selon les revendications 19, 20 ou 21, dans lequel l'entrée des données d'utilisateur dans les champs respectifs parmi la pluralité de champs d'entrée traitables par ordinateur à l'aide du menu d'entrée comprend en outre :
en réponse à une sélection d'une option de menu (176) dans le menu d'entrée correspondant à l'un des champs d'entrée traitables par ordinateur, l'affichage d'au moins un fragment d'une représentation symbolique du document électronique exploitable par machine par le moteur d'interface, dans lequel le fragment de la représentation symbolique (179) comprend une représentation symbolique (188) de l'un des champs d'entrée traitables par ordinateur (184c) ; et
en réponse à une sélection d'une autre option de menu dans le menu d'entrée correspondant à un autre des champs d'entrée traitables par ordinateur, le passage direct du moteur d'interface à l'affichage d'au moins un autre fragment de la représentation symbolique, dans lequel l'autre fragment de la représentation symbolique comprend une représentation symbolique d'un autre des champs d'entrée traitables par ordinateur.

23. Terminal final selon les revendications 19, 20, 21 ou 22, dans lequel l'entrée des données d'utilisateur dans les champs respectifs parmi la pluralité de champs d'entrée traitables par ordinateur à l'aide du menu d'entrée comprend :
en réponse à une sélection d'une option de menu (176) dans le menu d'entrée correspondant à l'un des champs d'entrée traitables par ordinateur (184c), l'affichage d'au moins une partie d'une information explicative (189 ; 184b) sur l'un des champs d'entrée traitables par ordinateur ; et
en réponse à une sélection d'une autre option de menu dans le menu d'entrée correspondant à un autre des champs d'entrée traitables par ordinateur, le passage direct du moteur d'interface à l'affichage d'au moins une partie d'une autre information explicative de l'autre des champs d'entrée traitables par ordinateur.

24. Terminal final selon les revendications 19, 20, 21, 22 ou 23, dans lequel le logiciel est en outre configuré pour :
amener le moteur d'interface à déplacer une option de menu du menu d'entrée correspondant à l'un des champs d'entrée traitables par ordinateur, vers une extrémité du menu d'entrée, une fois que des données d'utilisateur requises dans ledit champ d'entrée traitable par ordinateur ont été stockées dans ledit champ d'entrée traitable par ordinateur du document électronique exploitable par machine sur le terminal final.

25. Terminal final selon les revendications 19, 20, 21, 22, 23 ou 24, dans lequel le logiciel est en outre configuré pour amener le moteur d'interface à afficher la liste à partir d'un champ d'entrée générique traitable par ordinateur.

26. Terminal final selon les revendications 19, 20, 21, 22, 23 ou 25, dans lequel le terminal final est un dispositif mobile et le terminal distant est un serveur.
